# FASCICULE DE BREVET EUROPEEN

(11) **EP 1 265 793 B1**
(45) Date de publication et mention de la délivrance du brevet: **29.09.2004**
(21) Numéro de dépôt: 02710744.0
(22) Date de dépôt: 15.02.2002
(51) Int. Cl.: B65D 77/22, B65D 51/16, B65B 55/02, B65B 25/00

(54) **PROCEDE DE TRAITEMENT PAR LA CHALEUR ET DE CONSERVATION SOUS PRESSION GAZEUSE CONTROLEE**
VERFAHREN ZUR WÄRMEBEHANDLUNG UND KONSERVIERUNG UNTER KONTROLLIERTEM GASDRUCK
METHOD FOR HEAT TREATMENT AND PRESERVATION UNDER CONTROLLED GAS PRESSURE

(30) Priorité: 16.02.2001 WO PCT/CH01/00105
(43) Date de publication de la demande: 18.12.2002
(73) Titulaire: Janka, Vanda, 1740 Neyruz (CH)
(72) Inventeur: Janka, Vanda, 1740 Neyruz (CH)
(74) Mandataire: BOVARD AG - Patentanwälte
(86) Numéro de dépôt international: PCT/CH2002/000097
(87) Numéro de publication internationale: WO 2002/066336

(56) Documents cités:
- EP-A- 0 881 159
- FR-A- 2 629 060
- FR-A- 2 695 108
- FR-A- 2 731 414
- FR-A- 2 796 924
- US-A- 3 937 396
- US-A- 4 689 936
- US-A- 5 587 192
- US-A- 5 989 608
- US-B1- 6 182 850
- PATENT ABSTRACTS OF JAPAN vol. 1995, no. 02, 31 mars 1995 (1995-03-31) -& JP 06 329179 A (YOSHIO OYAMA;OTHERS: 02), 29 novembre 1994 (1994-11-29)

## Description

L'invention se rapporte à un procédé de traitement par la chaleur de matières placées dans des réceptacles à paroi souple.

L'invention s'applique plus particulièrement, mais non exclusivement au traitement par la chaleur de matières, placées dans des réceptacles à paroi souple, en vue de leur conservation dans ces réceptacles.

L'invention s'applique de manière avantageuse, mais non exclusive au traitement par la chaleur de matières consistant en des denrées périssables, notamment des denrées alimentaires périssables.

Par denrées alimentaires périssables, on désigne à titre d'exemple, de la viande, du poisson, des légumes, des mets préparés...

L'invention se rapporte également :
- à une installation conçue pour la mise en oeuvre du procédé,
- à un réceptacle conçu pour la mise en oeuvre du procédé,
- à un élément obturateur conçu pour la mise en oeuvre du procédé,
- aux matières placées dans des réceptacles à paroi souple et traitées selon ledit procédé.

Par réceptacle à paroi souple, on désigne un réceptacle constitué d'au moins un élément dont la paroi est au moins localement souple, c'est-à-dire a une résistance à la flexion telle que cette paroi est susceptible de se déformer notablement sous l'effet d'une pression gazeuse dominante développée par un fluide situé :
- à l'intérieur dudit réceptacle, notamment lorsqu'une augmentation de la température interne du contenu du réceptacle engendre l'expansion d'un fluide gazeux situé dans ledit réceptacle, et/ou
- à l'extérieur dudit réceptacle, notamment lorsqu'une réduction de la température interne du contenu du réceptacle engendre la condensation d'un fluide à l'état gazeux situé dans ledit réceptacle.

Dans le domaine de la conservation de denrées alimentaires, il est connu de longue date de traiter thermiquement les denrées à température élevée, et notamment de les cuire, dans un réceptacle dont la paroi constituera ultérieurement une barrière à l'air et aux germes qu'il contient.

Dans ce domaine, il est connu :
- de constituer des réceptacles dans une feuille de matériau synthétique, souple et transparente, avantageusement soudable sur elle-même, puis
- d'y placer les matières,
- de fermer chaque réceptacle après en avoir extrait l'air,
- d'élever la température, par exemple, pour réaliser une pasteurisation, une stérilisation ou une cuisson.

Ces réceptacles peuvent avoir différentes formes, par exemple consister en une poche dont l'ouverture de chargement est fermée par rapprochement et soudage de parties du bord qui la définissent, ou un bac comportant une ouverture équipée d'une surface périphérique contre laquelle on soude un opercule.

Avec ce type de réceptacle, les matières à traiter par la chaleur doivent préalablement à l'étape de traitement par la chaleur être enfermées sous vide dans chaque réceptacle.

Cette étape a pour fonction de réduire notablement l'influence de l'air résiduel dans le réceptacle et qui, en se dilatant lors du traitement par la chaleur, risquerait d'induire l'éclatement dudit réceptacle.

L'inconvénient majeur de ce type d'emballage est qu'à l'issue de l'étape d'emballage sous vide, les matières se retrouvent fortement comprimées contre elles-mêmes et contre les parois du réceptacle dans lequel elles se trouvent, ce qui peut altérer considérablement leur aspect, voire, les détruire.

Sans pour autant remédier à l'écrasement des matières ainsi traitées, il est connu de masquer l'aspect comprimé desdites matières en recouvrant au moins partiellement le réceptacle avec un matériau opaque, tel un sur-emballage en carton.

Cette solution augmente sensiblement le prix de vente des produits traités.

Une autre solution onéreuse consiste à utiliser un four de type dit à contre pression, pour lutter contre la déformation de la paroi du réceptacle, pendant le traitement par la chaleur.

Une autre solution consiste à équiper le réceptacle avec une valve automatique qui va permettre l'échappement du fluide gazeux contenu dans ce réceptacle jusqu'à ce qu'au moins l'un des paramètres que sont la température interne ou la pression interne, atteigne une valeur prédéterminée.

Lorsque la valeur prédéterminée est atteinte la valve se ferme et interdit tout passage.

De telles valves automatiques sont décrites, notamment, dans les documents FR-A-2629060, FR-A-2695108, JP 06329179, US-A-5,587,192, FR-A-2796924, FR-A-2731414, US-A- 5,989,608.

Ces valves à fonction "anti retour" comprennent un élément obturateur destiné à fermer étanchement un orifice qui, réalisé dans la paroi du réceptacle, permet l'échappement d'un fluide sous pression qui, autrement, serait retenu par cette paroi.

A l'exception de la valve du document FR-A-2796924 qui met en oeuvre un élément obturateur en matériau fusible à une température déterminée, les valves des autres documents mettent en oeuvre un élément obturateur constitué, d'une part, d'une membrane souple placée en appui contre une portion de la paroi de réceptacle pourvue d'au moins un orifice d'échappement et, d'autre part, au moins un moyen garantissant l'application étanche de ladite membrane souple contre la paroi, lorsque la pression interne au réceptacle devient inférieure à la pression extérieure.

Les valves automatiques de l'état de la technique comprenant un moyen garantissant l'application étanche de la membrane, diffèrent entre elles essentiellement par la technique utilisée pour constituer le dit moyen.

Ces valves automatiques ont leurs avantages, mais, outre qu'elles sont onéreuses à mettre au point, elles ne permettent pas assurément de maîtriser la déformation de la paroi souple dudit réceptacle lors du refroidissement.

En effet, avec ces valves, lorsque la fermeture est confirmée, la dépression dans le réceptacle atteint généralement un certain niveau de vide, voire un niveau de vide qualifiable de vide total, ce qui affecte plus ou moins notablement la forme de la paroi dudit réceptacle.

Un résultat que l'invention vise à obtenir est un procédé qui, tout en étant simple et économique à mettre en oeuvre permet de traiter par la chaleur des matières placées dans des réceptacles à paroi souple, sans engendrer les inconvénients qui viennent d'être exposés.

Un autre résultat que l'invention vise à obtenir est un procédé qui permet de maîtriser la quantité et la qualité du fluide gazeux contenu dans le réceptacle avant fermeture de l'orifice d'échappement de ce réceptacle et après fermeture de cet orifice.

A cet effet, l'invention a pour objet un procédé pour le traitement par la chaleur de matières contenues dans un réceptacle à paroi souple, c'est-à-dire constitué d'au moins un élément à paroi au moins localement souple, et selon lequel procédé, pour traiter les matières,
- après avoir placé lesdites matières dans le réceptacle puis fermé ce réceptacle, on chauffe le contenu dudit réceptacle jusqu'à une première valeur de température, de manière à provoquer le traitement thermique recherché,
- lors du refroidissement du contenu du réceptacle vers une deuxième valeur prédéterminée de température, telle la température ambiante, avant que la température du contenu du réceptacle atteigne cette deuxième valeur prédéterminée de température, on laisse un fluide gazeux développant une pression à l'intérieur du réceptacle, s'échapper par au moins un orifice de section déterminée, préalablement aménagé dans la paroi dudit réceptacle, cet échappement de fluide gazeux ayant lieu jusqu'à ce que la température des matières contenues dans ce réceptacle atteigne une troisième valeur prédéterminée de température et que, à cette troisième valeur prédéterminée de température, on obture étanchement l'orifice d'échappement au moyen d'un élément obturateur.

Ce procédé est caractérisé en ce qu'en vue de, à la fois,
- maîtriser la déformation de la paroi souple dudit réceptacle lors du refroidissement et après l'opération d'obturation, et
- garantir la conservation des matières placées dans ce réceptacle,
on choisit, d'une part, la troisième valeur de température et, d'autre part, la valeur de la section de l'orifice d'échappement de manière telle qu'on peut obturer cet orifice d'échappement lorsque :
- la température du fluide gazeux contenu dans le réceptacle a atteint une valeur préalablement déterminée par rapport à une valeur de consigne considérée comme limite inférieure pour garantir la neutralité de l'atmosphère contenue dans ledit réceptacle, et
- la valeur de la pression de ce fluide gazeux à l'intérieur du réceptacle, est supérieure à la valeur de la pression gazeuse externe et reflète la présence à l'intérieur dudit réceptacle d'un volume de fluide gazeux au moins suffisant pour qu'après obturation dudit orifice d'échappement et refroidissement du contenu du réceptacle à la deuxième valeur de température, ledit fluide gazeux développe sa pression contre la paroi du réceptacle et s'oppose à une déformation préjudiciable de cette paroi sous l'effet de la pression externe au réceptacle, cette déformation étant considérée comme préjudiciable lorsqu'au moins l'un des aspects visuels que sont l'aspect visuel du réceptacle et celui de son contenu est altéré.

A titre d'exemples, l'aspect visuel d'un réceptacle ayant avant traitement une forme géométrique définie est considéré comme altéré après traitement, lorsque ce réceptacle présente :
- une ou plusieurs arêtes dont la rectitude n'est plus respectée, ou
- une ou plusieurs faces avec des plis ou une concavité notable.

L'invention se rapporte également :
- à une installation conçue pour la mise en oeuvre du procédé,
- à un réceptacle conçu pour la mise en oeuvre du procédé,
- à un élément obturateur conçu pour la mise en oeuvre du procédé,
- aux matières placées dans des réceptacles à paroi souple et traitées selon ledit procédé.

L'invention sera bien comprise à la lecture de la description ci-après faite à titre d'exemple non limitatif, en regard du dessin ci-annexé qui représente :
Figures 1 et 2 : vus en coupe transversale, des réceptacles pour le traitement de matières par la chaleur, selon le procédé de l'invention.

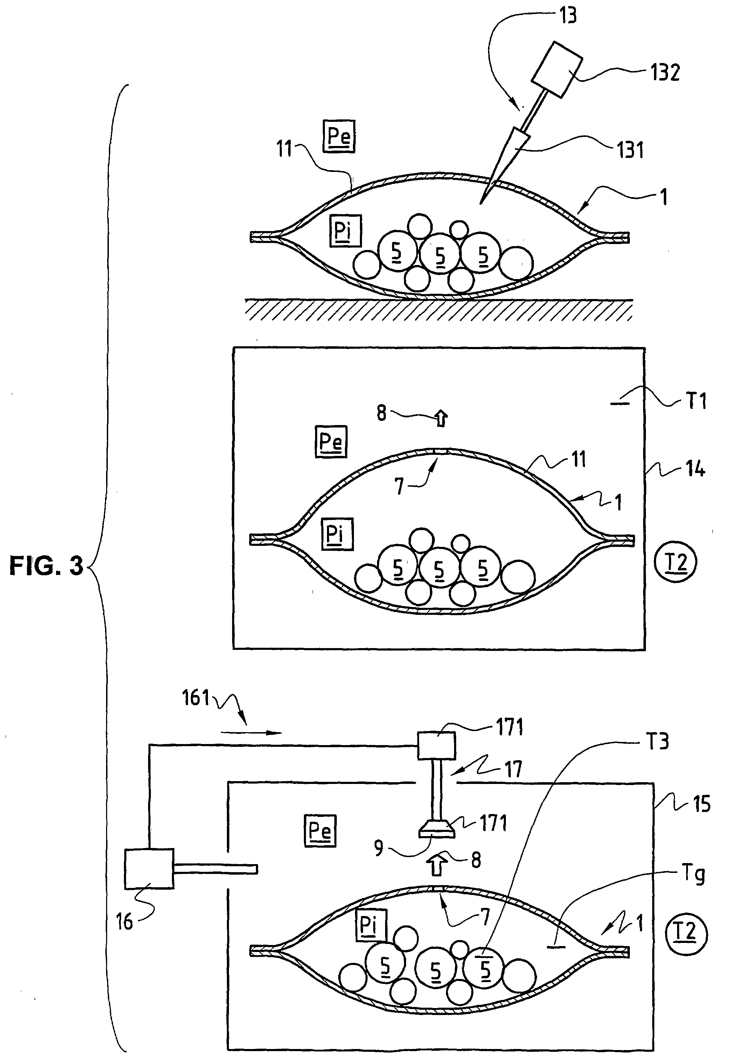

Figure 3 : une installation en vue de la mise en oeuvre du procédé selon l'invention.

En se reportant au dessin, on voit un réceptacle 1 à paroi souple 11, c'est-à-dire un réceptacle 1 constitué d'au moins un élément 2, 3, 4 à paroi souple 11, destiné à contenir des matières 5 pour leur conservation après traitement par la chaleur.

Bien que cela n'apparaisse pas sur les dessins, par réceptacle 1 à paroi souple 11, on désigne un réceptacle 1 constitué d'au moins un élément 2, 3, 4 dont la paroi 11 est au moins localement souple, c'est-à-dire a une résistance à la flexion telle que cette paroi 11 est susceptible de se déformer notablement sous l'effet d'une pression gazeuse développée par un fluide situé à l'intérieur dudit réceptacle 1, notamment lors d'une élévation de pression engendrée par une augmentation de la température du contenu dudit réceptacle 1.

Sur les dessins, la pression gazeuse interne au réceptacle 1 est symbolisée par un carré qui, situé à l'intérieur du réceptacle, est repéré Pi, tandis que la pression gazeuse externe audit réceptacle, est symbolisée par un carré qui, situé à l'extérieur dudit réceptacle, est repéré Pe.

Pour procéder au traitement de matières 5 par la chaleur en vue de leur conservation sous pression gazeuse contrôlée :
- on se munit d'un réceptacle 1 à paroi souple 11 et comprenant une ouverture 6 de chargement,
- on introduit les matières 5 dans ce réceptacle 1,
- on ferme le réceptacle 1,
- on chauffe au moins le contenu du réceptacle 1 jusqu'à une première valeur prédéterminée T1 de température, de manière à provoquer le traitement par la chaleur qui est recherché, par exemple, une pasteurisation, une cuisson ou une stérilisation des matières 5,
- on laisse refroidir ledit réceptacle 1 et son contenu, notamment jusqu'à une deuxième valeur prédéterminée T2 de température, telle la température ambiante, ou une température d'entreposage.

Au cours de ce traitement, il faut prendre soin de :
- au plus tard préalablement au traitement par la chaleur, réaliser dans la paroi 11 du réceptacle 1 au moins un orifice 7, dit orifice d'échappement 7, de section notablement réduite par rapport à la section de l'ouverture 6 dudit réceptacle 1 mais qui est à même de constituer un passage pour un fluide gazeux 8 développant sa pression à l'intérieur du réceptacle 1,
- procéder au traitement des matières 5 par la chaleur en les portant à la première valeur prédéterminée T1 de température, et ce, sans entraver la possibilité pour le fluide gazeux 8 contenu dans le réceptacle 1 de s'échapper par l'orifice d'échappement 7 prévu à cet effet, puis,
- abaisser la température des matières 5 contenues dans le réceptacle 1 jusqu'à une troisième valeur prédéterminée T3 de température, et ce, sans entraver la possibilité pour le fluide gazeux 8 contenu dans le réceptacle 1 de s'échapper par l'orifice d'échappement 7 prévu à cet effet et,
- lorsque la troisième valeur prédéterminée T3 de température est atteinte, obturer étanchement l'orifice d'échappement 7 aménagé dans la paroi 11 dudit réceptacle 1, et ce au moyen d'un élément obturateur 9.

Au cours du traitement, on prend soin, à la fois :
- de préserver la neutralité de l'atmosphère finalement retenue dans le réceptacle 1, c'est-à-dire l'atmosphère gazeuse contenue dans ledit réceptacle 1 après l'opération d'obturation,
- de limiter la déformation de la paroi souple dudit réceptacle 1 lors du refroidissement, notamment vers ladite valeur de deuxième température T2 prédéterminée.

D'une manière plus synthétique, on peut retenir que l'invention concerne un procédé pour le traitement par la chaleur de matières 5 contenues dans un réceptacle 1 à paroi souple 11, c'est-à-dire constitué d'au moins un élément 2, 3, 4 à paroi 11 au moins localement souple, et selon lequel procédé, pour traiter les matières 5,
- après avoir placé lesdites matières 5 dans le réceptacle 1 puis fermé ce réceptacle 1, on chauffe le contenu dudit réceptacle 1 jusqu'à une première valeur T1 de température, de manière à provoquer le traitement recherché,
- lors du refroidissement du contenu du réceptacle 1 vers une deuxième valeur prédéterminée T2 de température, telle la température ambiante, avant que la température du contenu du réceptacle 1 atteigne cette deuxième valeur prédéterminée T2 de température, on laisse un fluide gazeux 8 développant une pression à l'intérieur du réceptacle 1, s'échapper par au moins un orifice d'échappement 7 de section déterminée, préalablement aménagé dans la paroi dudit réceptacle 1, cet échappement de fluide gazeux 8 ayant lieu jusqu'à ce que la température des matières 5 contenues dans ce réceptacle 1 atteigne une troisième valeur prédéterminée T3 de température et que, à cette troisième valeur prédéterminée T3 de température, on obture étanchement l'orifice d'échappement 7 au moyen d'un élément obturateur 9.

Le procédé selon l'invention est remarquable en ce qu'en vue de, à la fois,
- maîtriser la déformation de la paroi souple dudit réceptacle 1 lors du refroidissement et après l'opération d'obturation et,
- garantir la conservation des matières contenues dans ledit réceptacle 1,
on choisit, d'une part, la troisième valeur T3 de température et, d'autre part, la valeur de la section de l'orifice d'échappement 7 de manière telle qu'on peut obturer cet orifice d'échappement 7 lorsque :
- la température Tg du fluide gazeux 8 contenu dans le réceptacle 1 a atteint une valeur préalablement déterminée par rapport à une valeur de consigne considérée comme limite inférieure pour garantir la neutralité de l'atmosphère contenue dans ledit réceptacle 1, et
- la valeur de la pression Pi de ce fluide gazeux 8 à l'intérieur du réceptacle 1, est supérieure à la valeur de la pression gazeuse externe Pe et reflète la présence à l'intérieur dudit réceptacle 1 d'un volume de fluide gazeux 8 au moins suffisant pour qu'après obturation dudit orifice d'échappement 7 et refroidissement du contenu du réceptacle 1 à la deuxième valeur T2 de température, ledit fluide gazeux 8 développe sa pression contre la paroi 11 du réceptacle 1 et s'oppose à une déformation préjudiciable de cette paroi 11 sous l'effet de la pression Pe externe au réceptacle 1, cette déformation étant considérée comme préjudiciable lorsqu'au moins l'un des aspects visuels que sont l'aspect visuel du réceptacle 1 et celui de son contenu est altéré.

Le respect de ces caractéristiques permet d'obtenir le résultat annoncé pour l'invention.

Le fluide gazeux 8 a été symbolisé par une flèche repérée 8.

En général, avant le traitement thermique, le fluide gazeux 8 est constitué d'air atmosphérique ambiant, tel l'air qui environne le réceptacle au moment du chargement des matières, mais il pourrait s'agir d'un fluide gazeux d'une autre nature.

Pendant et à l'issu du traitement, le fluide gazeux 8 peut comprendre de l'air, de la vapeur d'eau, ainsi que d'autres gaz émis par les matières lors du traitement.

Le volume des gaz et/ou de vapeurs, essentiellement de la vapeur d'eau, d'une part, produits par les matières lors du traitement thermique et, d'autre part, dilaté par la température, est en général considérable et se mélange et/ou se substitue plus ou moins au fluide gazeux atmosphérique, tel l'air atmosphérique, initialement contenu dans le réceptacle.

C'est la raison pour laquelle on considère plus après que lors du traitement thermique, les matières produisent ou génèrent du fluide gazeux 8.

Après traitement, les réceptacles obturés selon le procédé de l'invention contiennent donc un certain volume de fluide effectivement gazeux dont :
- la neutralité est telle qu'il n'affecte pas les matières traitées, et
- la pression est telle qu'elle s'oppose à l'écrasement des matières par la paroi du réceptacle, sous l'effet de la pression atmosphérique.

De manière notable :
- lors d'une phase d'essais dans une installation de traitement de type prédéfini, on détermine,
   . d'une part, ladite troisième valeur de température T3 adaptée pour effectuer l'obturation de l'orifice d'échappement 7 d'un réceptacle 1 de type déterminé dans lequel ont été placées des matières 5 déterminées en vue de leur traitement à la première valeur de température T1, et
   . d'autre part, la durée de refroidissement nécessaire pour que la température desdites matières 5 atteigne la troisième valeur de température T3 souhaitée,
- lors de la mise en oeuvre du procédé pour traiter les mêmes matières 5 que celles considérées pendant la phase d'essais, et ce, dans une installation de traitement semblable à l'installation utilisée pour la phase d'essais, dans un réceptacle 1 de même type que celui utilisé lors de cette la phase d'essais, on effectue l'obturation de l'orifice d'échappement 7 lorsque la durée du refroidissement depuis la première valeur de température atteint la durée déterminée au cours de la phase d'essais.

L'indication selon laquelle pour réaliser le traitement, on utilise une installation semblable à celle utilisée pour la phase d'essais, n'exclut pas que ces installations ne constituent en fait qu'une seule et même installation.

Toujours selon le procédé, pour garantir que, à l'instant possible pour effectuer l'obturation, la valeur de la pression Pi de ce fluide gazeux 8 est supérieure à la valeur Pe de la pression gazeuse externe au réceptacle 1, on procède d'au moins l'une des cinq manières que sont :
- une première manière selon laquelle, au cours du refroidissement, avant l'obturation de l'orifice d'échappement 7, on laisse l'évacuation du fluide gazeux 8 se produire par l'orifice d'échappement 7 sous l'effet combiné, d'une part, de la production naturelle de ce fluide gazeux 8 et, d'autre part, d'une poussée qui est engendrée sur ce fluide 8 par la paroi du réceptacle 1 à qui ce fluide gazeux 8 a préalablement imprimé une déformation élastique,
- une deuxième manière selon laquelle, au cours du refroidissement avant l'obturation de l'orifice d'échappement 7, on applique une action de poussée sur la paroi 11 du réceptacle 1 de manière, d'une part, à provoquer l'évacuation progressive dudit fluide gazeux 8 et à maintenir une certaine surpression à l'intérieur dudit réceptacle 1 et, d'autre part, à affecter la forme de ce réceptacle 1 dans une mesure compensable par un accroissement de la pression du fluide gazeux 8 qui se produit après obturation de l'orifice d'échappement 7,
- une troisième manière selon laquelle, au cours du refroidissement, avant l'obturation de l'orifice d'échappement 7, on injecte dans le réceptacle 1 un fluide gazeux, dit additionnel, de caractéristiques prédéterminées, et ce, avec un débit et une pression tels, qu'en s'échappant par l'orifice d'échappement 7, il maintienne à l'intérieur du réceptacle 1 une pression de fluide gazeux 8 à une valeur Pi supérieure à la valeur Pe de la pression gazeuse externe au réceptacle 1 jusqu'à l'instant jugé possible pour effectuer l'obturation,
- une quatrième manière selon laquelle, au cours du refroidissement, avant l'obturation de l'orifice d'échappement 7, on applique une action de poussée sur la paroi 11 du réceptacle 1 pour, en maintenant une certaine surpression à l'intérieur dudit réceptacle 1, accélérer l'évacuation dudit fluide gazeux 8 jusqu'à ce qu'on obture l'orifice d'échappement 7,
- une cinquième manière selon laquelle, au cours du refroidissement, avant l'obturation de l'orifice d'échappement 7, on retient à l'intérieur du réceptacle 1 un volume de fluide gazeux 8 au moins suffisant pour qu'après obturation de l'orifice d'échappement 7, ledit fluide gazeux 8 s'oppose à l'application de cette paroi 11 sur les matières 5 sous l'effet de la pression externe au réceptacle 1.

Le choix d'une de ces manières de procéder permet de s'adapter, notamment, à la texture des matières, au volume ainsi qu'à différents types de réaction des matières traitées.

De manière notable :
- pour choisir la troisième valeur T3 de température, on réalise un essai préalable de traitement par la chaleur et, lorsque par cet essai préalable, on constate qu'en refroidissant le réceptacle 1 et son contenu à la deuxième valeur T2 de température, les matières 5 contenues dans ce réceptacle 1 génèrent un volume de fluide gazeux 8 qui, bien que provoquant une surpression à l'intérieur du réceptacle 1, ne déforme pas élastiquement la paroi 11 de ce réceptacle 1 au-delà d'une limite acceptable prédéterminée,
- on fixe la troisième valeur T3 de température de manière telle qu'au cours du refroidissement, on obture l'orifice d'échappement 7 au plus tard lorsque la température Tg du fluide gazeux 8 contenu dans le réceptacle 1 atteint sensiblement la valeur de consigne.

Cette première manière de procéder est particulièrement adaptée lorsque le volume de fluide gazeux 8 généré par les matières 5 contenues dans ce réceptacle 1 est pratiquement évacué avant que la température Tg du fluide gazeux 8 contenu dans le réceptacle atteint sensiblement la valeur de consigne.

Conformément à une autre manière de procéder :
- pour choisir la troisième valeur T3 de température, on réalise un essai préalable de traitement par la chaleur et, lorsque par cet essai préalable, on constate qu'en refroidissant le réceptacle 1 et son contenu à la deuxième valeur T2 de température, les matières 5 contenues dans le réceptacle 1 génèrent un volume de fluide gazeux 8 qui ne devient susceptible d'affecter la forme du réceptacle 1 qu'essentiellement lorsque la température Tg dudit fluide gazeux 8 contenu dans réceptacle 1 atteint une valeur notablement inférieure à la valeur de consigne,
- on fixe la troisième valeur T3 de température de manière telle qu'au cours du refroidissement, on obture l'orifice d'échappement 7 lorsque la température Tg du fluide gazeux 8 atteint une valeur inférieure à la valeur de consigne, et
- au cours du refroidissement, avant l'obturation de l'orifice d'échappement, on applique une action de poussée sur la paroi 11 du réceptacle 1 de manière, d'une part, à provoquer l'évacuation progressive dudit fluide gazeux 8 et à maintenir une certaine surpression à l'intérieur dudit réceptacle 1 et, d'autre part, à affecter la forme de ce réceptacle 1 dans une mesure compensable par un accroissement de la pression du fluide gazeux 8 qui se produit après l'obturation de l'orifice d'échappement 7.

Cette déformation de la paroi du réceptacle préalable à l'obturation et dans une mesure qui n'altère pas son aspect, par exemple en lui donnant localement une certaine concavité, permet de maintenir une certaine surpression dans ce réceptacle avant l'obturation et de prendre en compte le fait qu'un certain volume de fluide gazeux sera produit par les matières, après obturation de l'orifice d'échappement.

Ainsi, au lieu de venir altérer la forme du réceptacle, le volume de fluide produit après l'obturation permettra au contraire au réceptacle de retrouver une forme jugée convenable.

Cette deuxième manière de procéder convient spécialement au cas où les matières contenues dans le réceptacle comprennent une partie centrale et une partie périphérique ayant des inerties thermiques différentes et particulièrement, une partie périphérique qui transmet rapidement ses calories au fluide gazeux contenu dans le réceptacle et une partie centrale qui conserve ses calories un certain temps et ne commence à les transmettre à la partie périphérique que lorsque la température du fluide gazeux est notablement inférieure à la valeur de consigne.

D'une manière notable, lorsqu'on souhaite obturer l'orifice d'échappement 7 lorsque la température Tg du fluide gazeux 8 contenu dans le réceptacle atteint une valeur inférieure à la valeur de consigne, et que lors d'un essai préalable de traitement par la chaleur, on constate qu'en refroidissant le réceptacle 1 et son contenu à la deuxième valeur T2 de température, les matières 5 contenues dans ce réceptacle 1 ne génèrent pas un volume de fluide gazeux 8 suffisant pour que la valeur de la pression Pi de ce fluide gazeux 8 reste notablement supérieure à la valeur Pe de la pression externe au réceptacle 1 jusqu'à l'instant de l'obturation :
- au cours du refroidissement, on injecte dans le réceptacle un fluide gazeux, dit additionnel, de caractéristiques prédéterminées, et ce, avec un débit et une pression tels, qu'en s'échappant par l'orifice d'échappement 7, il maintienne à l'intérieur du réceptacle 1 une pression de fluide gazeux 8 à une valeur Pi supérieure à la valeur Pe de la pression gazeuse externe au réceptacle 1 à l'instant jugé possible pour effectuer l'obturation.

Cette troisième manière de procéder est particulièrement adaptée au cas où l'on souhaite obturer l'orifice d'échappement 7 lorsque la température dudit fluide est inférieure à la valeur de consigne et qu'à cette température les matières contenues dans le réceptacle ne produisent plus suffisamment de fluide gazeux pour maintenir le réceptacle en surpression.

L'injection de fluide additionnel dans le réceptacle permet de maintenir une pression interne suffisante pour entraver l'entrée de germes.

D'une autre manière notable, lorsqu'on souhaite obturer l'orifice d'échappement 7 lorsque la température Tg du fluide gazeux 8 contenu dans le réceptacle atteint une valeur au moins égale à la valeur de consigne, et que, lors d'un essai préalable de traitement par la chaleur, on constate qu'en refroidissant le réceptacle 1 et son contenu à la deuxième valeur T2 de température, les matières 5 contenues dans ce réceptacle 1 génèrent un volume de fluide gazeux 8 tel que la valeur de la pression Pi du fluide gazeux 8 devient notablement supérieure à la valeur Pe de la pression externe au réceptacle 1 et, au moins à l'instant de l'obturation, dépasse une valeur limite prédéterminée considérée comme non acceptable:
- au cours du refroidissement, on applique une action de poussée sur la paroi 11 du réceptacle 1 pour, en maintenant une certaine surpression à l'intérieur dudit réceptacle 1, accélérer l'évacuation dudit fluide gazeux 8 jusqu'à ce qu'on obture l'orifice d'échappement 7.

Cette quatrième manière de procéder est particulièrement adaptée lorsque les matières contenues dans le réceptacle produisent un grand volume de fluide gazeux et qu'il y a lieu de chasser ce fluide pour, en respectant la valeur de température choisie pour l'obturation, pouvoir contrôler la déformation de la paroi du réceptacle sans devoir augmenter la section du ou des orifices d'échappement 7, ce qui pourrait s'avérer préjudiciable pour la neutralité de l'atmosphère contenue dans ledit réceptacle.

Suivant une autre manière de procéder :
- pour choisir la troisième valeur T3 de température, on réalise un essai préalable de traitement par la chaleur et, lorsque par cet essai préalable, on constate qu'en refroidissant le réceptacle 1 et son contenu à la deuxième valeur T2 de température, la paroi 11 de ce réceptacle 1 a tendance à s'appliquer trop étroitement sur les matières 5 au risque de les altérer et que la présence d'un volume gazeux prédéterminé serait nécessaire pour s'opposer à l'application de la paroi 11 sur les matières 5 après fermeture de l'orifice d'échappement 7,
- on fixe la troisième valeur T3 de température de manière telle qu'au cours du refroidissement, on obture l'orifice d'échappement 7 lorsque la température Tg du fluide gazeux 8 atteint une valeur supérieure à la valeur de consigne, et cela de manière à retenir un tel volume prédéterminé de fluide gazeux 8 à l'intérieur du réceptacle 1 pour qu'après obturation de l'orifice d'échappement 7, ledit fluide gazeux 8 s'oppose à l'application de cette paroi 11 sur les matières 5 sous l'effet de la pression externe au réceptacle 1.

Cette cinquième manière de procéder est particulièrement adaptée au cas où les matières contenues dans le réceptacle l'occupent en quasi-totalité.

Le fluide gazeux retenu dans le réceptacle s'oppose à l'application de cette paroi 11 sur les matières 5, sous l'effet de la pression externe au réceptacle 1 et, par cela, permet de leur assurer une protection notable contre les meurtrissures.

En suivant les indications précitées, l'homme de l'art est à même de déterminer exactement les première et troisième valeurs T1, T3 de température, notamment, en fonction de la nature des matières 5 à traiter et du résultat qu'il cherche à obtenir avec le traitement par la chaleur, telle une pasteurisation, une cuisson ou et une stérilisation.

De manière notable, la valeur de consigne considérée comme limite inférieure pour garantir la neutralité de l'atmosphère contenue dans ledit réceptacle 1 est de 72°C (soixante douze degrés Celsius).

Selon une première possibilité remarquable, le fluide gazeux, dit additionnel, de caractéristiques prédéterminées, est constitué par de l'air bactériologiquement neutre.

Suivant une deuxième possibilité remarquable, le fluide gazeux, dit additionnel, de caractéristiques prédéterminées, est constitué par un fluide gazeux non oxydant, bactériologiquement neutre.

Conformément à une troisième possibilité remarquable, le fluide gazeux, dit additionnel, de caractéristiques prédéterminées, est constitué par du fluide gazeux issu du réceptacle.

Le fait que la paroi souple comprenne un orifice d'échappement 7 permet d'éviter son éclatement lors du traitement par la chaleur et le fait que l'on maîtrise distinctement la température et la pression auxquelles on obture cet orifice d'échappement 7, après que le traitement ait été réalisé, permet de garantir la neutralité de l'atmosphère gazeuse finalement emprisonnée dans le réceptacle 1 en maîtrisant la déformation de cette paroi.

En procédant de cette manière, on obtient le résultat annoncé pour l'invention à savoir qu'on obtient des matières 5 qui, après avoir été traitées par la chaleur dans un réceptacle 1 fermé et à paroi souple, ne sont pas écrasées ou déformées par l'action que la pression atmosphérique développe finalement sur la paroi 11 dudit réceptacle 1.

De manière remarquable, le procédé de l'invention est utilisé pour la conservation de matières 5 consistant en des denrées périssables.

De manière encore remarquable, le procédé de l'invention est utilisé pour la conservation de matières 5 consistant en des denrées alimentaires périssables.

La mise en oeuvre du procédé de l'invention permet, de manière économique, de prolonger la durée de conservation de denrées alimentaires périssables, par rapport aux techniques classiques, et ce, sans usage d'agents conservateurs.

On estime que le procédé induit une réduction de la teneur en oxygène et un accroissement de la teneur en gaz carbonique.

Cette modification de l'atmosphère résiduelle, c'est-à-dire de l'atmosphère constituée par le fluide gazeux 8 retenu dans le réceptacle 1, suffit à provoquer une inhibition au moins partielle des germes aérobies et des microorganismes qui, au contact d'une atmosphère non traitée selon le procédé, entraînerait un phénomène de putréfaction et/ou le développement de moisissures.

C'est pour cette raison que le procédé de l'invention permet de retarder notablement la date limite de consommation des produits traités.

En ce qui concerne les dimensions et formes d'orifice d'échappement 7, elles peuvent être déterminées par l'homme de l'art en procédant à des essais.

En effet, notamment en ce qui concerne les dimensions du ou des orifices d'échappement 7, elles peuvent être déterminées en fonction du volume de gaz à évacuer lors du traitement par la chaleur.

De préférence chaque orifice d'échappement 7 est sensiblement circulaire.

Des orifices d'échappement 7 de diamètre compris entre un et deux millimètres permettent d'obtenir de bons résultats.

Plusieurs orifices d'échappement 7 peuvent être réalisés côte à côte et à faible distance l'un de l'autre.

Les orifices d'échappement 7 peuvent être réalisés par toute technique adaptée au matériau constituant la paroi 11 du réceptacle 1.

Par exemple, les orifices d'échappement 7 peuvent être réalisés par poinçonnage ou par découpe.

Quoi qu'il en soit, de manière remarquable, pour obturer l'orifice d'échappement 7, on met en oeuvre un élément obturateur 9 consistant en une pastille 91 de matériau souple et étanche à l'air et dont on associe l'une des faces 92, 93 de manière étanche à la surface de la paroi 11 qui comprend l'orifice d'échappement 7, de manière à fermer cet orifice d'échappement 7 et à entraver le passage de fluide par ce dernier.

De manière encore remarquable, on met en oeuvre un élément obturateur 9 consistant en une pastille 91 de matériau souple et étanche à l'air.

De préférence, on met en oeuvre un élément obturateur 9 consistant en une pastille 91 dé matériau souple et étanche à l'air et dont l'une 92 des faces 92, 93 est revêtue d'une couche 94 de colle choisie pour réaliser la liaison étanche avec la paroi 11 du réceptacle.

On conçoit donc que le procédé de l'invention est extrêmement simple à mettre en oeuvre que ce soit manuellement ou de manière mécanisée et automatisée, tel que cela est plus après exposé.

De manière remarquable, on réalise chaque orifice d'échappement 7 dans une zone de la paroi souple dont on détermine préalablement qu'elle est maintenue écartée des matières contenues dans le réceptacle lors de leur traitement par la chaleur.

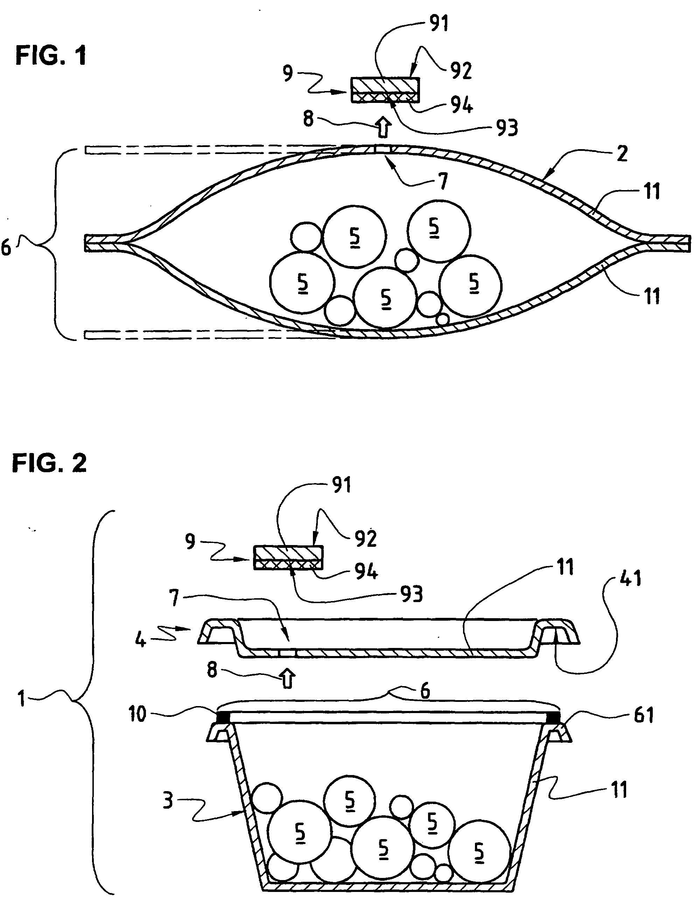

Dans la forme de réalisation représentée à la figure 1, le réceptacle 1 est constitué d'un élément 2 consistant en une poche 2 sensiblement aplatie dont le contour est déterminé par des rives, par exemple une poche obtenue par repliage d'une feuille sur elle-même, puis soudure de deux de ses bords superposés.

Sur cette figure, la poche 2 a été représentée fermée, c'est-à-dire après que des parties de sa paroi 11 qui, représentées en traits pointillés, sont maintenues écartées pour constituer l'ouverture de chargement 6 et ont été rapprochées et associées, par exemple par soudure.

Lorsque le réceptacle consiste en une poche souple dont le contour est déterminé par des rives, on réalise chaque orifice d'échappement 7 dans une zone de la paroi souple qui est voisine de l'une de ses rives.

En effet, on peut raisonnablement garantir que cette zone est maintenue écartée des matières contenues dans la poche souple, lors de leur traitement par la chaleur.

Dans une autre forme de réalisation, représentée à la figure 2, le réceptacle 1 est constitué de deux éléments 2, 3 dont un consistant en un bac 3 et l'autre consistant en un couvercle 4.

Selon le procédé, on se munit d'un réceptacle constitué par deux éléments 3, 4 dont un bac 3 et un couvercle 4, et dont au moins un a une paroi qui est au moins localement souple,
. le bac 3 comprenant une ouverture 6 équipée d'une face périphérique 61 destinée à coopérer avec un couvercle 4 lui-même équipé d'une portée 41 d'appui sur ladite face périphérique 61 de l'ouverture 6 dudit bac 3, et
. le couvercle 4 comprenant une telle portée 41 d'appui étanche sur la face périphérique 61 de l'ouverture de chargement 6 du bac 3, et
de manière remarquable :
- on place le couvercle 4 en appui étanche sur ladite face périphérique 61 de l'ouverture du bac 3,
- on réalise, dans au moins l'un des éléments 3, 4 du réceptacle 1, au moins un orifice, dit orifice d'échappement 7, de section notablement réduite par rapport à la section de l'ouverture 6 dudit bac 3 et à même de constituer un passage pour un fluide gazeux 8 sous pression.

De manière encore remarquable, selon le procédé de l'invention, au plus tard avant l'application du couvercle 4 sur le bac 3 :
- on équipe au moins l'une des surfaces 61, 41 que sont la face périphérique 61 de l'ouverture du bac 3 et/ou la portée d'appui 41 du couvercle 4 d'un joint 10 en matériau sensible à la chaleur, c'est-à-dire un joint 10 comprenant un matériau de nature telle que, lors du traitement du contenu du réceptacle 1 par la chaleur, il engendre une liaison étanche entre les surfaces 41, 61 au contact desquelles il est placé.

Lorsque le réceptacle 1 est constitué par deux éléments 3, 4 dont, d'une part, un bac 3 et, d'autre part, un couvercle 4 dont la paroi est au moins localement souple et comporte une portée d'appui sur ledit bac 3, on réalise chaque orifice d'échappement 7 dans une zone du couvercle 4 qui est voisine de sa portée d'appui sur le bac 3.

En effet, on peut raisonnablement garantir que cette zone est maintenue écartée des matières contenues dans le bac, lors de leur traitement par la chaleur.

L'invention se rapporte également à une installation 12 pour la mise en oeuvre du procédé.

Cette installation 12 est remarquable en ce qu'elle comprend :
- un premier dispositif 13 de réalisation dans la paroi 11 du réceptacle 1 d'au moins un orifice 7, dit orifice d'échappement 7, de section notablement réduite par rapport à la section de l'ouverture 6 dudit réceptacle 1 mais qui est à même de constituer un passage pour un fluide gazeux 8 développant sa pression à l'intérieur du réceptacle 1.
- un deuxième dispositif 14 de traitement des matières 5 par la chaleur en les portant à la première valeur prédéterminée T1 de température, ce deuxième dispositif 14 autorisant l'échappement du fluide gazeux 8 contenu dans le réceptacle 1 par l'orifice d'échappement 7 prévu à cet effet,
- un troisième dispositif 15 d'abaissement de la température des matières 5 contenues dans le réceptacle 1 jusqu'à une troisième valeur prédéterminée T3 de température, et ce, sans entraver la possibilité pour le fluide gazeux 8 contenu dans le réceptacle 1 de s'échapper par l'orifice d'échappement 7 prévu à cet effet,
- un quatrième dispositif 16 de surveillance de l'évolution au moins indirecte de la température des matières 5 contenues dans le réceptacle 1, de détection de la troisième valeur T3 de température et de production d'un signal de commande 161, lorsque la troisième valeur prédéterminée de température est, au moins, considérée comme atteinte,
- un cinquième dispositif 17 d'obturation de l'orifice d'échappement 7 aménagé dans la paroi 11 dudit réceptacle 1, ce dispositif étant commandé par le signal de commande 161, lorsque la troisième valeur prédéterminée T3 de température est, au moins, considérée comme atteinte.

Dans une forme de réalisation le premier dispositif 13 de réalisation dans la paroi 11 du réceptacle 1 d'au moins un orifice 7, dit orifice d'échappement 7, comprend, d'une part, un organe perforateur 131, tel un poinçon, et, d'autre part, un organe moteur de ce poinçon et un appareil de commande automatique 132 qui exploite au moins une information relative à la troisième valeur T3 de température et/ou à la durée de refroidissement avant obturation.

Selon une forme de réalisation, le deuxième dispositif 14 de traitement des matières 5 par la chaleur consiste avantageusement en un four à vapeur 14 de type conventionnel.

Suivant une forme de réalisation le troisième dispositif 15 d'abaissement de la température des matières 5 contenues dans le réceptacle 1 jusqu'à une troisième valeur prédéterminée T3 de température, consiste en une enceinte 15 de refroidissement.

En ce qui concerne le quatrième dispositif 16 de surveillance de l'évolution de la température des matières 5 contenues dans le réceptacle 1, de détection de la troisième valeur prédéterminée T3 de température et de production d'un signal de commande 161, lorsque la troisième valeur prédéterminée T3 de température est, au moins, considérée comme atteinte, il peut consister en un appareil de thermométrie 16 de type produisant un signal, tel un signal 161 électrique, lorsqu'une valeur de température prédéfinie est détectée.

De manière avantageuse, tel que cela a été précisé plus avant, lorsqu'on surveille une durée de refroidissement, ce quatrième dispositif 16 consiste avantageusement en un dispositif de mesure du temps de type produisant un signal, tel un signal 161 électrique, lorsque la durée de refroidissement prédéterminée est atteinte.

Quant au cinquième dispositif 17 d'obturation de l'orifice d'échappement 7 aménagé dans la paroi 11 dudit réceptacle 1, il comprend avantageusement, d'une part, un organe 171 applicateur et, d'autre part, un organe d'actionnement de cet organe applicateur ainsi qu'un appareil de commande automatique 172 qui exploite au moins une information relative à la troisième valeur T3 de température et/ou à la durée de refroidissement avant obturation.

L'installation 12 est également remarquable en ce qu'elle comprend un sixième dispositif pour, au cours du refroidissement et avant l'obturation de l'orifice d'échappement 7, appliquer une action de poussée sur la paroi 11 du réceptacle 1 de manière, à provoquer l'évacuation progressive dudit fluide gazeux 8 et à maintenir une certaine surpression à l'intérieur dudit réceptacle 1 afin de réaliser au moins l'une des fonctions que sont :
- affecter la forme de ce réceptacle 1 dans une mesure compensable par un accroissement de la pression du fluide gazeux 8 qui se produit après obturation de l'orifice d'échappement 7,
- accélérer l'évacuation dudit fluide gazeux 8 jusqu'à ce qu'on obture l'orifice d'échappement 7.

Ce sixième dispositif comprend avantageusement, d'une part, un organe applicateur d'une poussée et, d'autre part, un organe moteur et un appareil de commande automatique de la poussée qui exploite au moins une information relative à la troisième valeur T3 de température et/ou à la durée de refroidissement avant obturation.

L'installation 12 est encore remarquable en ce qu'elle comprend un septième dispositif pour, au cours du refroidissement, avant l'obturation de l'orifice d'échappement 7, injecter dans le réceptacle 1 un fluide gazeux, dit additionnel, de caractéristiques prédéterminées, et ce, avec un débit et une pression tels, qu'en s'échappant par l'orifice d'échappement 7, il maintienne à l'intérieur du réceptacle 1 une pression de fluide gazeux 8 à une valeur Pi supérieure à la valeur Pe de la pression gazeuse externe au réceptacle 1 jusqu'à l'instant jugé possible pour effectuer l'obturation.

Ce septième dispositif comprend avantageusement, une source de fluide additionnel sous pression, ainsi qu'au moins un organe d'injection de fluide gazeux additionnel et un appareil de commande automatique de l'injection qui exploite au moins une information relative à la troisième valeur T3 de température et/ou à la durée de refroidissement avant obturation.

Sur les dessins, la première valeur prédéterminée T1 de température a été indiquée pour le contenu dudit deuxième dispositif 14 de traitement des matières 5 par la chaleur.

La troisième valeur prédéterminée T3 de température, a quant à elle été indiquée pour les matières 5 contenues dans le réceptacle 1.

La deuxième valeur prédéterminée T2 de températures a été indiquée dans un cercle situé à côté de chacun desdits deuxième et troisième dispositifs 14, 15, de manière à symboliser par exemple la température de l'atmosphère située autour de ces dispositifs 14, 15.

L'invention se rapporte également à un réceptacle 1 conçu pour la mise en oeuvre du procédé.

Selon l'invention ce réceptacle 1 est remarquable en ce que :
- il est constitué d'au moins deux éléments 3, 4 dont un bac 3 et un couvercle 4 et au moins l'un de ces éléments 3, 4 est en matériau souple apte à être localement perforé d'un orifice 7, dit orifice d'échappement 7 de section à même de constituer un passage pour un fluide gazeux 8 sous pression,
   . le bac 3 comprenant une ouverture 6 équipée d'une face périphérique 61 destinée à coopérer avec un couvercle 4 lui-même équipé d'une portée 41 d'appui sur ladite face périphérique 61 de l'ouverture 6 du réceptacle 1,
   . le couvercle 4 comprenant une telle portée 41 d'appui étanche sur la face périphérique 61 de l'ouverture de chargement 6 du réceptacle 1,
- il comprend un joint 10 qui équipe au moins l'une des surfaces 41, 61 que sont la face périphérique 61 de l'ouverture et/ou la portée d'appui 41 du couvercle 4, ce joint étant réalisé en matériau de nature telle que, lors du traitement du contenu du réceptacle 1 par la chaleur, il engendre une liaison étanche entre les surfaces 41, 61 au contact desquelles il est placé.

A titre d'exemple non limitatif, le bac 3 et le couvercle sont en polypropylène, avantageusement de type alimentaire, supportant une température de cent vingt degrés Celsius et un chauffage au four, dit à micro-ondes.

Egalement, le bac 3 et le couvercle 4 peuvent être réalisés en polyéthylène.

Selon l'invention ce réceptacle 1 est remarquable en ce qu'il consiste en une poche 2 à paroi souple 11, en matériau apte à être localement perforé d'un orifice 7 , dit orifice d'échappement 7 de section à même de constituer un passage pour un fluide gazeux 8 sous pression.

A titre d'exemple, les matériaux en film utilisés dans le domaine de la conservation sous vide conviennent pour la réalisation de la poche 2.

L'invention se rapporte également à l'élément obturateur 9 de l'orifice d'échappement 7.

Cet élément obturateur 9 est remarquable en ce qu'il consiste en une pastille 91 de matériau souple et étanche à l'air et dont l'une 92 des faces 92, 93 est revêtue d'une couche 94 de colle choisie pour réaliser la liaison étanche avec la paroi 11 du réceptacle 1 autour d'au moins un orifice 7 dit orifice d'échappement 7, de manière à entraver le passage d'un fluide gazeux 8.

A titre d'exemple, la pastille 91 est en polypropylène et l'une 92 de ses faces 92, 93 est revêtue d'une couche 94 de colle de type alimentaire.

## Revendications

1. Procédé pour le traitement par la chaleur de matières (5) contenues dans un réceptacle (1) à paroi souple (11), c'est-à-dire constitué d'au moins un élément (2, 3, 4) à paroi (11) au moins localement souple, et selon lequel procédé, pour traiter les matières (5),
• après avoir placé lesdites matières (5) dans le réceptacle (1) puis fermé ce réceptacle (1), on chauffe le contenu dudit réceptacle (1) jusqu'à une première valeur (T1) de température, de manière à provoquer le traitement recherché,
• lors du refroidissement du contenu du réceptacle (1) vers une deuxième valeur prédéterminée (T2) de température, telle la température ambiante, avant que la température du contenu du réceptacle (1) atteigne cette deuxième valeur prédéterminée (T2) de température, on laisse un fluide gazeux (8) développant une pression à l'intérieur du réceptacle (1), s'échapper par au moins un orifice (7) de section déterminée, préalablement aménagé dans la paroi dudit réceptacle (1), cet échappement de fluide gazeux (8) ayant lieu jusqu'à ce que la température des matières (5) contenues dans ce réceptacle (1) atteigne une troisième valeur prédéterminée (T3) de température et que, à cette troisième valeur prédéterminée (T3) de température, on obture étanchement l'orifice d'échappement (7) au moyen d'un élément obturateur (9),
ce procédé étant **caractérisé en ce qu'**en vue de, à la fois,
• maîtriser la déformation de la paroi souple dudit réceptacle (1) lors du refroidissement et après l'opération d'obturation et,
• garantir la conservation des matières contenues dans ledit réceptacle (1),
on choisit, d'une part, la troisième valeur (T3) de température et, d'autre part, la valeur de la section de l'orifice d'échappement (7) de manière telle qu'on peut obturer cet orifice d'échappement (7) lorsque :
- la température (Tg) du fluide gazeux (8) contenu dans le réceptacle (1) a atteint une valeur préalablement déterminée par rapport à une valeur de consigne considérée comme limite inférieure pour garantir la neutralité de l'atmosphère contenue dans ledit réceptacle (1), et
- la valeur de la pression (Pi) de ce fluide gazeux (8) à l'intérieur du réceptacle (1), est supérieure à la valeur de la pression gazeuse externe Pe et reflète la présence à l'intérieur dudit réceptacle (1) d'un volume de fluide gazeux (8) au moins suffisant pour qu'après obturation dudit orifice d'échappement (7) et refroidissement du contenu du réceptacle (1) à la deuxième valeur (T2) de température, ledit fluide gazeux (8) développe sa pression contre la paroi (11) du réceptacle (1) et s'oppose à une déformation préjudiciable de cette paroi (11) sous l'effet de la pression (Pe) externe au réceptacle (1), cette déformation étant considérée comme préjudiciable lorsqu'au moins l'un des aspects visuels que sont l'aspect visuel du réceptacle (1) et celui de son contenu est altéré.

2. Procédé selon la revendication 1 **caractérisé en ce que**, pour garantir qu'à l'instant possible pour effectuer l'obturation, la valeur de la pression (Pi) de ce fluide gazeux (8) est supérieure à la valeur (Pe) de la pression gazeuse externe au réceptacle (1), on procède d'au moins l'une des cinq manières que sont :
- une première manière selon laquelle, au cours du refroidissement, avant l'obturation de l'orifice d'échappement (7), on laisse l'évacuation du fluide gazeux (8) se produire par l'orifice d'échappement (7) sous l'effet combiné, d'une part, de la production naturelle de ce fluide gazeux (8) et, d'autre part, d'une poussée qui est engendrée sur ce fluide (8) par la paroi du réceptacle (1) à qui ce fluide gazeux (8) a préalablement imprimé une déformation élastique,
- une deuxième manière selon laquelle, au cours du refroidissement, avant l'obturation de l'orifice d'échappement (7), on applique une action de poussée sur la paroi (11) du réceptacle (1) de manière, d'une part, à provoquer l'évacuation progressive dudit fluide gazeux (8) et à maintenir une certaine surpression à l'intérieur dudit réceptacle (1) et, d'autre part, à affecter la forme de ce réceptacle (1) dans une mesure compensable par un accroissement de la pression du fluide gazeux (8) qui se produit après obturation de l'orifice d'échappement (7),
- une troisième manière selon laquelle, au cours du refroidissement, avant l'obturation de l'orifice d'échappement (7), on injecte dans le réceptacle (1) un fluide gazeux, dit additionnel, de caractéristiques prédéterminées, et ce, avec un débit et une pression tels, qu'en s'échappant par l'orifice d'échappement (7), il maintienne à l'intérieur du réceptacle (1) une pression de fluide gazeux (8) à une valeur (Pi) supérieure à la valeur (Pe) de la pression gazeuse externe au réceptacle (1) jusqu'à l'instant jugé possible pour effectuer l'obturation,
- une quatrième manière selon laquelle, au cours du refroidissement, avant l'obturation de l'orifice d'échappement (7), on applique une action de poussée sur la paroi (11) du réceptacle (1) pour, en maintenant une certaine surpression à l'intérieur dudit réceptacle (1), accélérer l'évacuation dudit fluide gazeux (8) jusqu'à ce qu'on obture l'orifice d'échappement (7),
- une cinquième manière selon laquelle, au cours du refroidissement, avant l'obturation de l'orifice d'échappement (7), on retient à l'intérieur du réceptacle (1) un volume de fluide gazeux (8) au moins suffisant pour qu'après obturation de l'orifice d'échappement (7), ledit fluide gazeux (8) s'oppose à l'application de cette paroi (11) sur les matières (5) sous l'effet de la pression externe au réceptacle (1).

3. Procédé selon la revendication 1 ou 2 **caractérisé en ce que** :
- pour choisir la troisième valeur (T3) de température, on réalise un essai préalable de traitement par la chaleur et, lorsque par cet essai préalable, on constate qu'en refroidissant le réceptacle (1) et son contenu à la deuxième valeur (T2) de température, les matières (5) contenues dans ce réceptacle (1) génèrent un volume de fluide gazeux (8) qui, bien que provoquant une surpression à l'intérieur de réceptacle (1), ne déforme pas élastiquement la paroi (11) de ce réceptacle (1) au-delà d'une limite acceptable prédéterminée,
- on fixe la troisième valeur (T3) de température de manière telle qu'au cours du refroidissement, on obture l'orifice d'échappement (7) au plus tard lorsque la température (Tg) du fluide gazeux (8) contenu dans le réceptacle (1) atteint sensiblement la valeur de consigne.

4. Procédé selon la revendication 1 ou 2 **caractérisé en ce que** :
- pour choisir la troisième valeur (T3) de température, on réalise un essai préalable de traitement par la chaleur et, lorsque par cet essai préalable, on constate qu'en refroidissant le réceptacle (1) et son contenu à la deuxième valeur (T2) de température, la paroi (11) de ce réceptacle (1) a tendance à s'appliquer trop étroitement sur les matières (5) au risque de les altérer et que la présence d'un volume gazeux prédéterminé serait nécessaire pour s'opposer à l'application de la paroi (11) sur les matières (5) après fermeture de l'orifice d'échappement (7),
- on fixe la troisième valeur (T3) de température de manière telle qu'au cours du refroidissement, on obture l'orifice d'échappement (7) lorsque la température (Tg) du fluide gazeux (8) atteint une valeur supérieure à la valeur de consigne, et cela de manière à retenir un tel volume prédéterminé de fluide gazeux (8) à l'intérieur du réceptacle (1) pour qu'après obturation de l'orifice d'échappement (7), ledit fluide gazeux (8) s'oppose à l'application de cette paroi (11) sur les matières (5) sous l'effet de la pression externe au réceptacle (1).

5. Procédé selon la revendication 1 ou 2 **caractérisé en ce que**, lorsqu'on souhaite obturer l'orifice d'échappement (7) lorsque la température (Tg) du fluide gazeux (8) contenu dans le réceptacle atteint une valeur inférieure à la valeur de consigne, et que lors d'un essai préalable de traitement par la chaleur, on constate qu'en refroidissant le réceptacle (1) et son contenu à la deuxième valeur (T2) de température, les matières (5) contenues dans ce réceptacle (1) ne génèrent pas un volume de fluide gazeux (8) suffisant pour que la valeur de la pression (Pi) de ce fluide gazeux (8) reste notablement supérieure à la valeur (Pe) de la pression externe au réceptacle (1) à l'instant de l'obturation :
- au cours du refroidissement, on injecte dans le réceptacle un fluide gazeux, dit additionnel, de caractéristiques prédéterminées, et ce, avec un débit et une pression tels, qu'en s'échappant par l'orifice d'échappement (7), il maintienne à l'intérieur du réceptacle (1) une pression de fluide gazeux (8) à une valeur (Pi) supérieure à la valeur (Pe) de la pression gazeuse externe au réceptacle (1) jusqu'à l'instant jugé possible pour effectuer l'obturation.

6. Procédé selon la revendication 1 ou 2 **caractérisé en ce que** :
- pour choisir la troisième valeur (T3) de température, on réalise un essai préalable de traitement par la chaleur et, lorsque par cet essai préalable, on constate qu'en refroidissant le réceptacle (1) et son contenu à la deuxième valeur (T2) de température, les matières (5) contenues dans le réceptacle (1) génèrent un volume de fluide gazeux (8) qui ne devient susceptible d'affecter la forme du réceptacle (1) qu'essentiellement lorsque la température (Tg) dudit fluide gazeux (8) contenu dans le réceptacle (1) atteint une valeur notablement inférieure à la valeur de consigne,
- on fixe la troisième valeur (T3) de température de manière telle qu'au cours du refroidissement, on obture l'orifice d'échappement (7) lorsque la température (Tg) du fluide gazeux (8) atteint une valeur inférieure à la valeur de consigne, et
- au cours du refroidissement, avant l'obturation de l'orifice d'échappement (7), on applique une action de poussée sur la paroi (11) du réceptacle (1) de manière, d'une part, à provoquer l'évacuation progressive dudit fluide gazeux (8) et à maintenir une certaine surpression à l'intérieur dudit réceptacle (1) et, d'autre part, à affecter la forme de ce réceptacle (1) dans une mesure compensable par un accroissement de la pression du fluide gazeux (8) qui se produit après l'obturation de l'orifice d'échappement (7).

7. Procédé selon la revendication 1 ou 2 **caractérisé en ce que**, lorsqu'on souhaite obturer l'orifice d'échappement (7) lorsque la température (Tg) du fluide gazeux (8) contenu dans le réceptacle atteint une valeur au moins égale à la valeur de consigne, et que, lors d'un essai préalable de traitement par la chaleur, on constate qu'en refroidissant le réceptacle (1) et son contenu à la deuxième valeur (T2) de température, les matières (5) contenues dans ce réceptacle (1) génèrent un volume de fluide gazeux (8) tel que la valeur de la pression (Pi) du fluide gazeux (8) devient notablement supérieure à la valeur (Pe) de la pression externe au réceptacle (1) et, au moins à l'instant de l'obturation, dépasse une valeur limite prédéterminée considérée comme non acceptable:
- au cours du refroidissement, on applique une action de poussée sur la paroi (11) du réceptacle (1) pour, en maintenant une certaine surpression à l'intérieur dudit réceptacle (1), accélérer l'évacuation dudit fluide gazeux (8) jusqu'à ce qu'on obture l'orifice d'échappement (7).

8. Procédé selon l'une quelconque des revendications 1 à 7 **caractérisé en ce que** la valeur de consigne considérée comme limite inférieure pour garantir la neutralité de l'atmosphère contenue dans ledit réceptacle (1) est de 72°C (soixante douze degrés Celsius).

9. Procédé selon la revendication 2 ou 5 **caractérisé en ce que** le fluide gazeux, dit additionnel, de caractéristiques prédéterminées, est constitué par de l'air bactériologiquement neutre.

10. Procédé selon la revendication 2 ou 5 **caractérisé en ce que** le fluide gazeux, dit additionnel, de caractéristiques prédéterminées, est constitué par un fluide gazeux non oxydant, bactériologiquement neutre.

11. Procédé selon la revendication 2 ou 5 **caractérisé en ce que** le fluide gazeux, dit additionnel, de caractéristiques prédéterminées, est constitué par du fluide gazeux issu du réceptacle.

12. Procédé selon l'une quelconque des revendications 1 à 11 **caractérisé en ce que** pour obturer l'orifice d'échappement (7) on met en oeuvre un élément obturateur (9) consistant en une pastille (91) de matériau souple et étanche à l'air et dont on associe l'une des faces (92, 93) de manière étanche à la surface de la paroi (11) qui comprend l'orifice d'échappement (7), de manière à fermer cet orifice d'échappement (7) et à entraver le passage de fluide par ce dernier.

13. Procédé selon l'une quelconque des revendications 1 à 11 **caractérisé en ce qu'**on met en oeuvre un élément obturateur (9) consistant en une pastille (91) de matériau souple et étanche à l'air.

14. Procédé selon l'une quelconque des revendications 1 à 11 **caractérisé en ce qu'**on met en oeuvre un élément obturateur (9) consistant en une pastille (91) de matériau souple et étanche à l'air et dont l'une (92) des faces (92, 93) est revêtue d'une couche (94) de colle choisie pour réaliser la liaison étanche avec la paroi (11) du réceptacle.

15. Procédé selon l'une quelconque des revendications 1 à 14 et selon lequel, on se munit d'un réceptacle (1) dont la paroi souple (11) est constituée par deux éléments (3, 4) dont un bac (3) et un couvercle (4),
. le bac (3) comprenant une ouverture (6) équipée d'une face périphérique (61) destinée à coopérer avec un couvercle (4) lui-même équipé d'une portée (41) d'appui sur ladite face périphérique (61) de l'ouverture (6) dudit bac (3), et
. le couvercle (4) comprenant une telle portée (41) d'appui étanche sur la face périphérique (61) de l'ouverture de chargement (6) du bac (3),
ce procédé étant **caractérisé en ce que** :
- on place le couvercle (4) en appui étanche sur ladite face périphérique (61) de l'ouverture du bac (3),
- on réalise, dans au moins l'un des éléments (3, 4) du réceptacle (1), au moins un orifice (7), dit orifice d'échappement, de section notablement réduite par rapport à la section de l'ouverture (6) dudit bac (3) et à même de constituer un passage pour un fluide gazeux (8) sous pression.

16. Procédé selon la revendication 15 **caractérisé en ce qu'**au plus tard avant l'application du couvercle (4) sur le bac (3) :
- on équipe au moins l'une des surfaces (61, 41) que sont la face périphérique (61) de l'ouverture du bac (3) et/ou la portée d'appui (41) du couvercle (4) d'un joint (10) en matériau sensible à la chaleur, c'est à dire un joint (10) comprenant un matériau de nature telle que, lors du traitement du contenu du réceptacle (1) par la chaleur, il engendre une liaison étanche entre les surfaces (41, 61) au contact desquelles il est placé.

17. Procédé selon l'une quelconque des revendications 1 à 16 **caractérisé en ce qu'**on réalise chaque orifice d'échappement (7) dans une zone de la paroi souple (11) dont on détermine préalablement qu'elle est maintenue écartée des matières contenues dans le réceptacle (1) lors de leur traitement par la chaleur.

18. Procédé selon la revendication 17 **caractérisé en ce que** lorsque le réceptacle (1) consiste en une poche souple dont le contour est déterminé par des rives, on réalise chaque orifice d'échappement (7) dans une zone de la paroi souple qui est voisine de l'une desdites rives.

19. Procédé selon la revendication 17 **caractérisé en ce que** lorsque le réceptacle (1) est constitué par deux éléments (3, 4) dont, d'une part, un bac (3) et, d'autre part, un couvercle (4) dont la paroi est au moins localement souple et comporte une portée d'appui sur ledit bac (3), on réalise chaque orifice d'échappement (7) dans une zone du couvercle (4) qui est voisine de sa portée d'appui sur le bac (3).

20. Procédé selon l'une quelconque des revendications 1 à 19 **caractérisé en ce que** :
- lors d'une phase d'essais dans une installation de traitement de type prédéfini, on détermine,
. d'une part, ladite troisième valeur de température (T3) adaptée pour effectuer l'obturation de l'orifice d'échappement (7) d'un réceptacle (1) de type déterminé dans lequel ont été placées des matières (5) déterminées en vue de leur traitement à la première valeur de température (T1), et
. d'autre part, la durée de refroidissement nécessaire pour que la température desdites matières (5) atteigne la troisième valeur de température (T3) souhaitée,
- lors de la mise en oeuvre du procédé pour traiter les mêmes matières (5) que celles considérées pendant l'essai, et ce, dans une installation de traitement semblable à l'installation utilisée pour la phase d'essai, dans un réceptacle (1) de même type que celui utilisé lors de cette phase d'essais, on effectue l'obturation de l'orifice d'échappement (7) lorsque la durée du refroidissement depuis la première valeur (T1) de température atteint la durée déterminée au cours de la phase d'essais.

21. Installation pour la mise en oeuvre du procédé selon l'une quelconque des revendications 1 à 20, **caractérisée en ce qu'**elle comprend
- un premier dispositif (13) de réalisation dans la paroi (11) du réceptacle (1) d'au moins un orifice (7), dit orifice d'échappement (7), de section notablement réduite par rapport à la section de l'ouverture (6) dudit réceptacle (1) mais qui est à même de constituer un passage pour un fluide gazeux (8) développant sa pression à l'intérieur du réceptacle (1),
- un deuxième dispositif (14) de traitement des matières (5) par la chaleur en les portant à la première valeur prédéterminée (T1) de température, ce deuxième dispositif (14) autorisant l'échappement du fluide gazeux (8) contenu dans le réceptacle (1) par l'orifice d'échappement (7) prévu à cet effet,
- un troisième dispositif (15) d'abaissement de la température des matières (5) contenues dans le réceptacle (1) jusqu'à une troisième valeur prédéterminée (T3) de température, et ce, sans entraver la possibilité pour le fluide gazeux (8) contenu dans le réceptacle (1) de s'échapper par l'orifice d'échappement (7) prévu à cet effet,
- un quatrième dispositif (16) de surveillance de l'évolution au moins indirecte de la température des matières (5) contenues dans le réceptacle (1), de détection de la troisième valeur (T3) de température et de production d'un signal de commande (161), lorsque la troisième valeur prédéterminée de température est, au moins, considérée comme atteinte,
- un cinquième dispositif (17) d'obturation de l'orifice d'échappement (7) aménagé dans la paroi (11) dudit réceptacle (1), ce dispositif étant commandé par le signal de commande (161) lorsque la troisième valeur prédéterminée (T3) de température est, au moins, considérée comme atteinte.

22. Installation selon la revendication 21 **caractérisée en ce qu'**elle comprend un sixième dispositif pour, au cours du refroidissement et avant l'obturation de l'orifice d'échappement (7), appliquer une action de poussée sur la paroi (11) du réceptacle (1) de manière, à provoquer l'évacuation progressive dudit fluide gazeux (8) et à maintenir une certaine surpression à l'intérieur dudit réceptacle (1) afin de réaliser au moins l'une des fonctions que sont :
- affecter la forme de ce réceptacle (1) dans une mesure compensable par un accroissement de la pression du fluide gazeux (8) qui se produit après obturation de l'orifice d'échappement (7),
- accélérer l'évacuation dudit fluide gazeux (8) jusqu'à ce qu'on obture l'orifice d'échappement (7).

23. Installation selon la revendication 21 ou 22 **caractérisée en ce qu'**elle comprend un septième dispositif pour, au cours du refroidissement, avant l'obturation de l'orifice d'échappement (7), injecter dans le réceptacle (1) un fluide gazeux, dit additionnel, de caractéristiques prédéterminées, et ce, avec un débit et une pression tels, qu'en s'échappant par l'orifice d'échappement (7), il maintienne à l'intérieur du réceptacle (1) une pression de fluide gazeux (8) à une valeur (Pi) supérieure à la valeur (Pe) de la pression gazeuse externe au réceptacle (1) jusqu'à l'instant jugé possible pour effectuer l'obturation.

## Patentansprüche

1. Verfahren zur Wärmebehandlung von Stoffen (5), die sich in einem Behälter (1) mit nachgiebigen Wänden (11) befinden, nämlich in einem Behälter, der mindestens einen Bestandteil (2, 3, 4) mit einer mindestens örtlich nachgiebigen Wandung (11) aufweist, und wobei im Verfahren zur Behandlung der Stoffe (5)
• nach Einbringen der genannten Stoffe (5) in den Behälter (1) und Verschluss des Behälters (1) der Inhalt des genannten Behälters (1) bis auf einen ersten Wert der Temperatur (T1) erwärmt wird, um die beabsichtigte Behandlung hervorzurufen,
• beim Abkühlen des Inhalts des Behälters (1) auf einen zweiten, vorherbestimmten Wert der Temperatur (T2), wie der Umgebungstemperatur, ein gasförmiges Fluid (8), welches einen Druck im Inneren des Behälters (1) entwickelt, durch mindestens eine Öffnung (7) mit bestimmtem Querschnitt, welche zuvor in der Wandung des genannten Behälters (1) angebracht worden war, entweichen lässt, bevor der Inhalt des Behälters (1) diese zweite, vorbestimmte Temperatur (T2) erreicht hat, wobei dieses Entweichen des gasförmigen Fluids (8) stattfindet, bis die Temperatur der Stoffe (5) im Behälter (1) einen dritten, zuvor festgelegten Wert der Temperatur (T3) erreicht hat, und dass bei diesem dritten, zuvor festgelegten Wert der Temperatur (T3) die Austrittsöffnung (7) mittels eines Verschlusselements (9) dicht verschlossen wird,
und wobei das Verfahren **dadurch gekennzeichnet ist, dass** gleichzeitig,
• um die Verformung der nachgiebigen Wandung des genannten Behälters (1) beim Abkühlen und nach dem Verschliessen der Öffnung unter Kontrolle zu halten und
• die Konservierung der im genannten Behälter (1) befindlichen Stoffe zu gewährleisten,
einerseits ein dritter Wert der Temperatur (T3) vorgegeben und andererseits der Wert des Querschnittes der Austrittsöffnung (7) derart gewählt wird, dass diese Austrittsöffnung (7) verschlossen werden kann, wenn
- die Temperatur (Tg) des gasförmigen Fluids (8), das sich im Behälter (1) befindet, einen zuvor in Bezug auf einen Sollwert festgelegten Wert erreicht hat, wobei der Sollwert als Untergrenze einer Gewährleistung der Neutralität der Atmosphäre angesehen wird, die sich im genannten Behälter (1 ) befindet, und
- der Wert des Druckes (Pi) des gasförmigen Fluids (8) im Inneren des Behälters (1) den Wert des äusseren Gasdruckes Pe übersteigt und die Anwesenheit eines Volumens des gasförmigen Fluids (8) im Inneren des Behälters (1) anzeigt, das zumindest ausreicht, damit das gasförmige Fluid (8) nach dem Verschliessen der genannten Austrittsöffnung (7) und der Abkühlung des Inhalts des Behälters (1) auf den zweiten Wert der Temperatur (T2) einen Druck auf die Wandung (11) des Behälters (1) ausübt und einer schädlichen Verformung dieser Wandung (11) unter dem Einfluss des äusseren Druckes (Pe) auf den Behälter (1) entgegenwirkt, wobei eine solche Verformung als schädlich angesehen wird, wenn sich mindestens ein Aussehen, nämlich dasjenige des Behälters (1) und dasjenige seines Inhalts, verschlechtert hat.

2. Verfahren nach Anspruch 1, **dadurch gekennzeichnet, dass** zur Gewährleistung, dass zum möglichen Zeitpunkt des Verschliessens der Wert des Druckes (Pi) des gasförmigen Fluids (8) den Wert des Gasdruckes (Pe) ausserhalb des Behälters (1) übersteigt, zumindest nach einer der folgenden fünf Arten vorgegangen wird:
- eine erste Art, bei der im Verlaufe der Abkühlung und vor dem Verschliessen der Austrittsöffnung (7) ein Ausströmen des gasförmigen Fluids (8) durch die Austrittsöffnung (7) zugelassen wird unter der kombinierten Einwirkung einesteils der natürlichen Erzeugung dieses gasförmigen Fluids (8) und andererseits eines Druckes, der auf dieses Fluid (8) durch die Wand des Behälters 1 ausgeübt wird, die zuvor von diesem gasförmigen Fluid (8) eine elastische Verformung erhalten hat,
- eine zweite Art, bei der im Verlaufe der Abkühlung und vor dem Verschliessen der Austrittsöffnung (7) eine Druckeinwirkung auf die Wandung (11) des Behälters (1) ausgeübt wird, um einesteils ein progressives Ausströmen des genannten gasförmigen Fluids (8) und das Aufrechterhalten eines bestimmten Überdrucks im Inneren des genannten Behälters (1) hervorzurufen und andererseits die Form dieses Behälters (1) zu beeinflussen in einem Masse, welches durch eine Erhöhung des Druckes des gasförmigen Fluids (8) der sich nach dem Verschluss der Austrittsöffnung (7) einstellt, kompensierbar ist,
- eine dritte Art, bei der im Verlaufe der Abkühlung und vor dem Verschliessen der Austrittsöffnung (7) in den Behälter (1) ein gasförmiges Fluid eingeleitet wird, welches als Zusatzfluid bezeichnet wird und vorbestimmte Eigenschaften aufweist, und zwar in einer Menge und unter einem solchen Druck, dass es beim Ausströmen durch die Austrittsöffnung (7) im Inneren des Behälters (1) noch einen Druck des gasförmigen Fluids (8) auf einen Wert (Pi) über dem Wert (Pe) des äusseren Gasdruckes am Behälter (1) aufrecht erhält, bis zum Augenblick, der zum Verschliessen der Öffnung möglich ist,
- eine vierte Art, bei der im Verlaufe des Abkühlens und vor dem Verschliessen der Austrittsöffnung (7) ein Druck auf die Wandung (11) des Behälters (1) ausgeübt wird, um durch Aufrechterhalten eines bestimmten Überdrucks im Inneren des genannten Behälters (1) das Ausströmen des genannten gasförmigen Fluids (8) zu beschleunigen, bis die Austrittsöffnung (7) geschlossen wird,
- eine fünfte Art, bei der im Verlaufe der Abkühlung und vor dem Verschluss der Austrittsöffnung (7) im Inneren des Behälters (1) ein derartiges Volumen des gasförmigen Fluids (8) aufrecht erhalten wird, welches mindestens ausreicht, damit das genannte gasförmige Fluid (8) nach dem Verschliessen der Austrittsöffnung (7) einem Anlegen dieser Wandung (11) an die Stoffe (5) unter der Einwirkung des äusseren Druckes auf den Behälter (1) entgegenwirkt.

3. Verfahren nach Anspruch 1 oder 2, **dadurch gekennzeichnet, dass**
- zwecks Auswahl des dritten Wertes der Temperatur (T3) ein vorgängiger Versuch der Wärmebehandlung ausgeführt wird, und wenn bei diesem vorgängigen Versuch festgestellt wird, dass bei der Abkühlung des Behälters (1) und des Inhalts auf den zweiten Wert der Temperatur (T2) die Stoffe (5) im Behälter (1) ein solches Volumen an gasförmigem Fluid (8) erzeugen, dass, obwohl ein Überdruck im Inneren des Behälters (1) erzeugt wird, dieser die Wandung (11) dieses Behälters (1) über eine annehmbare vorbestimmte Grenze hinaus nicht verformt,
- der dritte Wert der Temperatur (T3) derart festgelegt wird, dass im Verlaufe der Abkühlung die Austrittsöffnung (7) spätestens dann verschlossen wird, wenn die Temperatur (Tg) des gasförmigen Fluids (8), welches sich im Behälter (1) befindet, im wesentlichen den Sollwert erreicht hat.

4. Verfahren nach Anspruch 1 oder 2, **dadurch gekennzeichnet, dass**
- zwecks Auswahl des dritten Wertes der Temperatur (T3) ein vorgängiger Versuch einer Wärmebehandlung ausgeführt wird, und wenn im Verlaufe dieses vorgängigen Versuches festgestellt wird, dass bei der Abkühlung des Behälters (1) und seines Inhaltes auf den zweiten Wert der Temperatur (T2) die Wandung (11) dieses Behälters (1) die Neigung hat, sich den Stoffen (5) zu stark zu nähern, so dass die Gefahr besteht, diese Stoffe zu beeinträchtigen, und dass die Gegenwart eines vorbestimmten Gasvolumens erforderlich wäre, um einem Anlegen der Wandung (11) an die Stoffe (5) nach dem Verschliessen der Austrittsöffnung (7) entgegen zu wirken,
- wird der dritte Wert der Temperatur (T3) derart festgelegt, dass im Verlaufe der Abkühlung die Austrittsöffnung (7) verschlossen wird, wenn die Temperatur (Tg) des gasförmigen Fluids (8) einen Wert erreicht, der über dem Sollwert liegt, und damit ein derartiges vorbestimmtes Volumen des gasförmigen Fluids (8) im Inneren des Behälters (1) zurückbleibt, dass nach dem Verschluss der Austrittsöffnung (7) das genannte gasförmige Fluid (8) einem Anlegen dieser Wandung (11) an die Stoffe (5) unter der Einwirkung des Aussendruckes am Behälter (1) entgegenwirkt.

5. Verfahren nach Anspruch 1 oder 2, **dadurch gekennzeichnet, dass**, wenn ein Verschluss der Austrittsöffnung (7) gewünscht wird, wenn die Temperatur (Tg) des gasförmigen Fluids (8), welches sich im Behälter befindet, einen Wert annimmt, der unterhalb des Sollwertes liegt, und wenn im Verlaufe eines vorgängigen Versuches der Wärmebehandlung festgestellt wird, dass bei der Abkühlung des Behälters (1) und seines Inhaltes auf den zweiten Wert der Temperatur (T2) die Stoffe (5), die sich im Behälter (1) befinden, kein solches Volumen an gasförmigem Fluid (8) erzeugen, das ausreicht, damit der Wert des Druckes (Pi) dieses gasförmigen Fluids (8) wesentlich oberhalb des Wertes (Pe) des äusseren Druckes am Behälter (1) im Augenblick des Verschliessens bleibt:
- wird im Verlaufe der Abkühlung ein gasförmiges Fluid, Zusatzfluid genannt, mit vorbestimmten Eigenschaften in den Behälter eingeleitet, und zwar in einer Menge und unter einem Druck derart, dass beim Ausströmen durch die Austrittsöffnung (7) im Inneren des Behälters (1) ein Druck von gasförmigem Fluid (8) auf einem Wert (Pi) aufrecht erhalten wird, der oberhalb des Wertes (Pe) des äusseren Gasdruckes am Behälter (1) liegt, bis zum Augenblick, der zum Verschliessen des Behälters als möglich erachtet wird.

6. Verfahren nach Anspruch 1 oder 2, **dadurch gekennzeichnet dass**:
- um den dritten Wert der Temperatur (T3) zu bestimmen, ein vorgängiger Versuch der Wärmebehandlung ausgeführt wird, und wenn mit Hilfe dieses vorgängigen Versuches festgestellt wurde, dass bei der Abkühlung des Behälters (1) und dessen Inhalts auf den zweiten Wert der Temperatur (T2) die im Behälter (1) befindlichen Stoffe (5) ein solches Volumen an gasförmigem Fluid (8) erzeugen, das nur dann ausreicht, die Form des Behälters (1) zu beeinflussen, wenn im Wesentlichen die Temperatur (Tg) des genannten gasförmigen Fluids (8), welches sich im Behälter (1) befindet, einen Wert erreicht, der wesentlich unterhalb des Sollwertes liegt,
- wird der dritte Wert der Temperatur (T3) derart festgelegt, dass die Austrittsöffnung (7) im Verlaufe der Abkühlung verschlossen wird, wenn die Temperatur (Tg) des gasförmigen Fluids (8) einen Wert erreicht, der unterhalb eines Sollwertes liegt, und
- im Verlaufe der Abkühlung und vor dem Verschliessen der Austrittsöffnung (7) auf die Wandung (11) des Behälters (1) eine Druckeinwirkung derart ausgeübt wird, dass einerseits ein progressives Ausströmen des genannten gasförmigen Fluids (8) hervorgerufen und ein bestimmter Überdruck im Inneren des genannten Behälters (1) aufrecht erhalten wird, und andererseits die Form dieses Behälters (1) in einem solchen Grad geändert wird, der durch eine Erhöhung des Druckes des gasförmigen Fluids (8), der sich nach dem Verschliessen der Austrittsöffnung (7) bildet, kompensierbar ist.

7. Verfahren nach Anspruch 1 oder 2, **dadurch gekennzeichnet dass**, wenn das Verschliessen der Austrittsöffnung (7) gewünscht wird, wenn die Temperatur (Tg) des gasförmigen Fluids (8), welches sich im Behälter befindet, einen Wert erreicht, der mindestens gleich dem Sollwert ist, und dass im Verlaufe eines vorgängigen Versuches der Wärmebehandlung festgestellt wird, dass bei der Abkühlung des Behälters (1) und dessen Inhalts auf den zweiten Wert der Temperatur (T2) die Stoffe 5, die sich im Behälter (1) befinden, ein Volumen an gasförmigem Fluid (8) erzeugen, derart, dass der Wert des Druckes (Pi) des gasförmigen Fluids (8) wesentlich oberhalb des Wertes (Pe) des Aussendruckes am Behälter (1) wird, und dass mindestens zum Zeitpunkt des Verschliessens einen vorbestimmten Grenzwert übersteigt, der als nicht annehmbar angesehen wird:
- wird im Verlaufe der Abkühlung ein Druck auf die Wandung (11) des Behälters (1) ausgeübt, um unter Aufrechterhaltung eines bestimmten Überdruckes im Inneren des genannten Behälters (1) das Ausströmen des genannten gasförmigen Fluids (8) zu beschleunigen, bis die Austrittsöffnung (7) verschlossen wird.

8. Verfahren nach einem der Ansprüche 1 bis 7, **dadurch gekennzeichnet, dass** der Sollwert, der als Untergrenze zur Gewährleistung der Neutralität der Atmosphäre, welche sich im genannten Behälter (1) befindet, angesehen wird, 72°C (zweiundsiebzig Grad Celsius) ist.

9. Verfahren nach Anspruch 2 oder 5, **dadurch gekennzeichnet, dass** das sogenannte gasförmige Zusatzfluid mit vorbestimmten Eigenschaften eine bakteriologisch neutrale Luft ist

10. Verfahren nach Anspruch 2 oder 5, **dadurch gekennzeichnet, dass** das sogenannte gasförmige Zusatzfluid mit vorbestimmten Eigenschaften ein nicht oxydierendes und bakteriologisch neutrales gasförmiges Fluid ist.

11. Verfahren nach Anspruch 2 oder 5, **dadurch gekennzeichnet, dass** das sogenannte gasförmige Zusatzfluid mit vorbestimmten Eigenschaften das gasförmige Fluid ist, welches aus dem Behälter abströmt.

12. Verfahren nach einem der Ansprüche 1 bis 11, dadurch ekennzeichnet, dass zum Verschliessen der Austrittsöffnung (7) ein Verschlusselement (9) verwendet wird, das aus einer Pastille (91) aus weichem und luftdichtem Material besteht, von dem eine Fläche (92, 93) dichtend der Oberfläche der Wandung (11), welche die Austrittsöffnung (7) enthält zugeordnet wird, um diese Austrittsöffnung (7) zu verschliessen und einen Durchgang von Fluid durch diese Öffnung zu verhindern.

13. Verfahren nach einem der Ansprüche 1 bis 11, **dadurch gekennzeichnet, dass** ein Verschlusselement (9) verwendet wird, welches aus einer Pastille (91) aus weichem und luftdichtem Material besteht.

14. Verfahren nach einem der Ansprüche 1 bis 11, **dadurch gekennzeichnet, dass** ein Verschlusselement (9) verwendet wird, welches aus einer Pastille (91) aus weichem und luftdichtem Material besteht, dessen eine (92) seiner beiden Seiten (92, 93) mit einer Klebstoffschicht (94) zum Erzeugen einer dichten Verbindung mit der Wandung (11) des Behälters versehen ist.

15. Verfahren nach einem der Ansprüche 1 bis 14, bei dem ein Behälter (1) verwendet wird, dessen biegsame Wandung (11) aus zwei Einzelteilen (3, 4) besteht, nämlich einem Trog (3) und einem Deckel (4),
- wobei der Trog (3) eine Öffnung (6) aufweist, deren Umfangsfläche (61) dazu bestimmt ist, mit einem Deckel (4) zusammenzuwirken, der seinerseits mit einer Anlagefläche (41) an die genannte Umfangsfläche (61) der Öffnung (6) des genannten Troges (3) versehen ist, und
- der Deckel (4) eine derartige Anlagefläche (41) aufweist, welche dichtend an der Umfangsfläche (61) der Füllöffnung (6) des Troges (3) anliegt,
wobei das Verfahren **dadurch gekennzeichnet ist, dass**
- der Deckel (4) mit dichter Anlage auf die genannte Umfangsfläche (61) der Öffnung des Troges (3) aufgelegt wird,
- in mindestens einem der Elemente (3, 4) des Behälters (1) mindestens eine sogenannte Austrittsöffnung (7) angebracht wird, deren Querschnitt bedeutend geringer ist als der Querschnitt der Öffnung (6) des genannten Troges (3) und in der Lage ist, einen Durchgang für ein unter Druck stehendes gasförmiges Fluid (8) zu bilden.

16. Verfahren nach Anspruch 15, **dadurch gekennzeichnet, dass** spätestens vor dem Aufsetzen des Deckels (4) auf den Trog (3)
- mindestens eine der Flächen (61, 41), nämlich die Umfangsfläche (61) der Öffnung des Troges (3) und/oder die Anlagefläche (41) des Deckels (4), mit einer Dichtung (10) aus einem wärmeempfindlichen Material versehen wird, d.h. eine Dichtung (10), welche ein Material mit solchen Eigenschaften aufweist, dass bei der Wärmebehandlung des Inhaltes des Behälters (1) eine dichte Verbindung zwischen den Flächen (41, 61) hergestellt wird, mit denen sie in Berührung ist.

17. Verfahren nach einem der Ansprüche 1 bis 16, **dadurch gekennzeichnet, dass** jede Austrittsöffnung (7) in einem Bereich der nachgiebigen Wandung (11) angebracht wird, wobei vorher sichergestellt wird, dass sie sich im Abstand von den Stoffen befindet, die sich während der Wärmebehandlung im Behälter (1) befinden.

18. Verfahren nach Anspruch 17, **dadurch gekennzeichnet, dass**, sofern der Behälter (1) aus einem weichen Beutel besteht, dessen Umfang von Randstreifen begrenzt ist, jede Austrittsöffnung (7) in einem Bereich der nachgiebigen Wandung angebracht wird, die sich in der Nähe eines der genannten Randstreifen befindet.

19. Verfahren nach Anspruch 17, **dadurch gekennzeichnet, dass**, sofern der Behälter (1) aus zwei Teilen (3, 4) besteht, nämlich einesteils aus einem Trog (3) und anderenteils aus einem Deckel (4), dessen Wandung mindestens örtlich nachgiebig ist und eine Anlagefläche auf diesem Trog (3) enthält, jede Austrittsöffnung (7) in einem Bereich des Deckels (4) angebracht wird, der sich in der Nähe der Anlagefläche auf dem Trog (3) befindet.

20. Verfahren nach einem der Ansprüche 1 bis 19, **dadurch gekennzeichnet, dass**
- in einer Behandlungseinrichtung der vorstehend definierten Art während einer Versuchsphase folgende Einzelheiten bestimmt werden:
- einerseits der genannte dritte Wert der Temperatur (T3), welcher an das Verschliessen der Austrittsöffnung (7) eines Behälters (1) der vorbestimmten Art angepasst ist, in den bestimmte Stoffe (5) eingebracht werden, welche beim ersten Wert der Temperatur (T1) zu behandeln sind, und
- andererseits die Dauer der Abkühlung, die erforderlich ist, damit die Temperatur der genannten Stoffe (5) den erwünschten dritten Wert der Temperatur (T3) erreicht,
- bei der Ausführung des Verfahrens zur Behandlung der gleichen Stoffe (5) wie der jenigen, die beim vorgängigen Versuch eingesetzt wurden, und in einer Behandlungseinrichtung, die derjenigen Einrichtung ähnlich ist, die bei der Versuchsphase verwendet wurde, in einem Behälter (1) der gleichen Art wie derjenigen, die bei dieser Versuchsphase verwendet wurde, der Verschluss der Austrittsöffnung (7) vorgenommen wird, wenn die Dauer der Abkühlung vom ersten Wert der Temperatur (T1) die Dauer erreicht hat, die im Verlaufe der Versuchsphase bestimmt wurde.

21. Einrichtung zur Durchführung des Verfahrens nach einem der Ansprüche 1 bis 20, **dadurch gekennzeichnet, dass** sie folgende Teile enthält:
- eine erste Vorrichtung (13) zur Erzeugung mindestens einer Öffnung (7) in der Wandung (11) des Behälters (1), Austrittsöffnung (7) genannt, mit einem Querschnitt, der in Bezug auf den Querschnitt der Öffnung (6) des genannten Behälters (1) bedeutend geringer ist, aber in der Lage ist, einen Durchgang eines gasförmigen Fluids (8), das einen Druck im Inneren des Behälters (1) entwickelt, zu gestatten;
- eine zweite Vorrichtung (14) zur Behandlung der Stoffe (5) durch Wärme, indem sie auf den ersten, vorbestimmten Wert der Temperatur (T1) gebracht werden, wobei diese zweite Vorrichtung (14) den Austritt des gasförmigen Fluids (8), das sich im Behälter (1) befindet, durch die zu diesem Zweck angebrachte Austrittsöffnung (7) gestattet,
- eine dritte Vorrichtung (15) zum Senken der Temperatur der im Behälter (1) befindlichen Stoffe (5) bis auf einen dritten, vorbestimmten Wert der Temperatur (T3), und zwar ohne die Möglichkeit zu verringern, dass das gasförmige Fluid (8) im Behälter (1) durch die für diesen Zweck vorgesehene Austrittsöffnung (7) ausströmen kann,
- eine vierte Vorrichtung (16) zur mindestens indirekten Überwachung der Entwicklung der Temperatur der Stoffe (5), die sich im Behälter (1) befinden, zum Ermitteln des dritten Werts der Temperatur (T3) und der Erzeugung eines Steuersignals (161), wenn der dritte, vorbestimmte Wert der Temperatur erreicht oder mindestens als erreicht betrachtet wird,
- eine fünfte Vorrichtung (17) zum Verschliessen der Austrittsöffnung (7), welche in der Wandung (11) des genannten Behälters (1) angebracht ist,
wobei diese Vorrichtung vom Steuersignal (161) angesteuert wird, wenn der dritte, vorbestimmte Wert der Temperatur (T3) erreicht oder mindestens als erreicht betrachtet wird.

22. Einrichtung nach Anspruch 21, **dadurch gekennzeichnet, dass** sie eine sechste Vorrichtung enthält, die dazu eingerichtet ist, um im Verlaufe der Abkühlung und vor dem Verschliessen der Austrittsöffnung (7) eine Druckeinwirkung auf die Wandung (11) des Behälters (1) derart auszuüben, dass ein progressiver Austritt des genannten gasförmigen Fluids (8) verursacht und ein bestimmter Überdruck im Inneren des genannten Behälters (1) aufrecht erhalten wird, um mindestens eine der folgenden Funktionen auszuüben:
- die Form des Behälters (1) in einem Ausmasse zu ändern, welches durch eine Erhöhung des Druckes des gasförmigen Fluids (8) ausgeglichen wird, welcher nach dem Verschliessen der Austrittsöffnung (7) entsteht,
- den Austritt des genannten gasförmigen Fluids (8) bis zum Verschliessen der Austrittsöffnung (7) zu beschleunigen.

23. Einrichtung nach Anspruch 21 oder 22, **dadurch gekennzeichnet, dass** sie eine siebente Vorrichtung aufweist, die dazu eingerichtet ist, um im Verlaufe der Abkühlung und vor dem Verschliessen der Austrittsöffnung (7) in den Behälter (1) ein sogenanntes gasförmiges Zusatzfluid einzuspeisen, welches vorbestimmte Eigenschaften aufweist, wobei dessen Menge und dessen Druck derart sind, dass beim Austritt dieses Zusatzfluids durch die Austrittsöffnung (7) im Inneren des Behälters (1) ein Druck des gasförmigen Fluids (8) mit einem Wert (Pi) verbleibt, der über dem Wert (Pe) des Gasdruckes am Äusseren des Behälters (1) herrscht, bis zum Zeitpunkt, der zum Verschliessen als möglich erachtet wird.

## Claims

1. Process for the heat treatment of substances (5) contained in a receptacle (1) having a flexible wall (11), i.e., made up of at least one element (2, 3, 4) having a wall (11) at least locally flexible, and according to which process, for treating the substances (5),
• after having placed said substances (5) in the receptacle (1), then closed this receptacle (1), the contents of said receptacle (1) are heated up to a first temperature value (T1), so as to cause the treatment sought,
• at the time of cooling of the contents of the receptacle (1) toward a second predetermined temperature value (T2), such as the ambient temperature, before the temperature of the contents of the receptacle (1) reaches this second predetermined temperature value (T2), a gaseous fluid (8) developing a pressure within the receptacle (1) is allowed to escape through at least one orifice (7) of a given cross-section, contrived beforehand in the wall of said receptacle (1), this escape of gaseous fluid (8) taking place until the temperature of the substances (5) contained in this receptacle (1) reaches a third predetermined temperature value (T3), and that at this third predetermined temperature value (T3), the escape orifice (7) is fluid-tightly stopped by means of a stopping element (9),
this process being **characterized in that** with a view to, simultaneously,
• controlling the deformation of the flexible wall of said receptacle (1) at the time of cooling and after the stopping operation and,
• guaranteeing the preservation of the substances contained in said receptacle (1),
the third temperature value (T3), on the one hand, and the value of the cross-section of the escape orifice (7), on the other hand, are chosen in such a way that this escape orifice (7) can be stopped when:
- the temperature (Tg) of the gaseous fluid (8) contained in the receptacle (1) has reached a previously determined value relative to a nominal value considered to be the lower limit for guaranteeing the neutrality of the atmosphere contained in said receptacle (1), and
- the value of the pressure (Pi) of this gaseous fluid (8) within the receptacle (1) is greater than the value of the external gas pressure Pe and reflects the presence within said receptacle (1) of a volume of gaseous fluid (8) at least sufficient so that, after stopping of said escape orifice (7) and cooling of the contents of the receptacle (1) to the second temperature value (T2), said gaseous fluid (8) develops its pressure against the wall (11) of the receptacle (1) and opposes a detrimental deformation of this wall (11) under the influence of the pressure (Pe) outside the receptacle (1), this deformation being considered detrimental when at least one of the visual aspects, which are the visual aspect of the receptacle (1) and that of its contents, is altered.

2. Process according to claim 1, **characterized in that**, for guaranteeing that at the moment possible for carrying out stopping, the value of the pressure (Pi) of this gaseous fluid (8) is greater than the value (Pe) of the gas pressure outside the receptacle (1), one proceeds in at least one of the five ways which are:
- a first way according to which, during cooling, before stopping of the escape orifice (7), evacuation of the gaseous fluid (8) is allowed to take place through the escape orifice (7) under the combined influence, on the one hand, of the natural production of this gaseous fluid (8) and, on the other hand, of a thrust which is created on this fluid (8) by the wall of the receptacle (1) on which this gaseous fluid (8) has previously impressed an elastic deformation,
- a second way according to which, during cooling, before stopping of the escape orifice (7), a thrust action is applied to the wall (11) of the receptacle (1) so as, on the one hand, to cause the gradual evacuation of said gaseous fluid (8) and to maintain a certain overpressure within said receptacle (1) and, on the other hand, to affect the shape of this receptacle (1) to an extent which can be compensated for by a rise in the pressure of the gaseous fluid (8) which is produced after stopping of the escape orifice (7),
- a third way according to which, during cooling, before stopping of the escape orifice (7), a so-called additional gaseous fluid, having predetermined characteristics, is injected into the receptacle (1), and doing so with a flow and a pressure such that, in escaping through the escape orifice (7), it maintains within the receptacle (1) a pressure of gaseous fluid (8) at a value (Pi) greater than the value (Pe) of the gas pressure outside the receptacle (1) until the moment deemed possible for carrying out the stopping,
- a fourth way according to which, during cooling, before stopping of the escape orifice (7), a thrust action is applied to the wall (11) of the receptacle (1) in order, while maintaining a certain overpressure within said receptacle (1), to accelerate the evacuation of said gaseous fluid (8) until the escape orifice (7) is stopped,
- a fifth way according to which, during cooling, before stopping of the escape orifice (7), a volume of gaseous fluid (8) is retained within the receptacle (1) at least sufficient so that, after stopping of the escape orifice (7), said gaseous fluid (8) opposes the application of this wall (11) against the substances (5) under the influence of the pressure outside the receptacle (1).

3. Process according to claim 1 or 2, **characterized in that**:
- for choosing the third temperature value (T3), a preliminary heat-treatment test is carried out, and when it is found by this preliminary test that in cooling the receptacle (1) and its contents to the second temperature value (T2), the substances (5) contained in this receptacle (1) generate a volume of gaseous fluid (8) which, though causing an overpressure within this receptacle (1), does not elastically deform the wall (11) of this receptacle (1) beyond a predetermined acceptable limit,
- the third temperature value (T3) is set in such a way that during cooling, the escape orifice (7) is stopped no later than when the temperature (Tg) of the gaseous fluid (8) contained in the receptacle (1) substantially reaches the nominal value.

4. Process according to claim 1 or 2, **characterized in that**:
- for choosing the third temperature value (T3), a preliminary heat-treatment test is carried out, and when it is found by this preliminary test that in cooling the receptacle (1) and its contents to the second temperature value (T2), the wall (11) of this receptacle (1) has a tendency to lie too closely against the substances (5) at the risk of altering them, and that the presence of a predetermined gas volume would be necessary to oppose the application of the wall (11) against the substances (5) after closing of the escape orifice (7),
- the third temperature value (T3) is set in such a way that during cooling, the escape orifice (7) is stopped when the temperature (Tg) of the gaseous fluid (8) reaches a value greater than the nominal value, and doing this so as to retain such a predetermined volume of gaseous fluid (8) within the receptacle (1) so that, after stopping of the escape orifice (7), said gaseous fluid (8) opposes the application of this wall (11) against the substances (5) under the influence of the pressure outside the receptacle (1).

5. Process according to claim 1 or 2, **characterized in that**, when it is desired to stop the escape orifice (7) when the temperature (Tg) of the gaseous fluid (8) contained in the receptacle reaches a value less than the nominal value, and when at the time of a preliminary heat-treatment test it is found that in cooling the receptacle (1) and its contents to the second temperature value (T2), the substances (5) contained in this receptacle (1) do not generate a sufficient volume of gaseous fluid (8) so that the value of the pressure (Pi) of this gaseous fluid (8) remains notably greater than the value (Pe) of the pressure outside the receptacle (1) at the moment of stopping:
- during cooling, a so-called additional gaseous fluid having predetermined characteristics is injected into the receptacle, and this is done with a flow and a pressure such that, in escaping through the escape orifice (7), it maintains within the receptacle (1) a pressure of gaseous fluid (8) at a value (Pi) greater than the value (Pe) of the gas pressure outside the receptacle (1) until the moment deemed possible for carrying out the stopping.

6. Process according to claim 1 or 2, **characterized in that**:
- for choosing the third temperature value (T3), a preliminary heat-treatment test is carried out, and when it is found by this preliminary test that in cooling the receptacle (1) and its contents to the second temperature value (T2), the substances (5) contained in the receptacle (1) generate a volume of gaseous fluid (8) which becomes capable of affecting the shape of the receptacle (1) essentially only when the temperature (Tg) of said gaseous fluid (8) contained in the receptacle (1) reaches a value notably less than the nominal value,
- the third temperature value (T3) is set in such a way that during cooling, the escape orifice (7) is stopped when the temperature (Tg) of the gaseous fluid (8) reaches a value less than the nominal value, and
- during cooling, before stopping of the escape orifice (7), a thrust action is applied to the wall (11) of the receptacle (1) so as, on the one hand, to cause the gradual evacuation of said gaseous fluid (8) and to maintain a certain overpressure within said receptacle (1), and on the other hand, to affect the shape of this receptacle (1) to an extent which can be compensated for by a rise in the pressure of the gaseous fluid (8) which is produced after stopping of the escape orifice (7).

7. Process according to claim 1 or 2, **characterized in that**, when it is desired to stop the escape orifice (7) when the temperature (Tg) of the gaseous fluid (8) contained in the receptacle reaches a value at least equal to the nominal value, and when, at the time of a preliminary heat-treatment test, it is found that in cooling the receptacle (1) and its contents to the second temperature value (T2), the substances (5) contained in this receptacle (1) generate a volume of gaseous fluid (8) such that the value of the pressure (Pi) of the gaseous fluid (8) becomes notably greater than the value (Pe) of the pressure outside the receptacle (1) and, at least at the moment of stopping, exceeds a predetermined limit value considered unacceptable:
- during cooling, a thrust action is applied to the wall (11) of the receptacle (1) in order, while maintaining a certain overpressure within said receptacle (1), to accelerate the evacuation of said gaseous fluid (8) until the escape orifice (7) is stopped.

8. Process according to any one of the claims 1 to 7, **characterized in that** the nominal value considered to be the lower limit for guaranteeing the neutrality of the atmosphere contained in said receptacle (1) is 72°C (seventy-two degrees Celsius).

9. Process according to claim 2 or 5, **characterized in that** the so-called additional gaseous fluid, having predetermined characteristics, is made up of bacteriologically neutral air.

10. Process according to claim 2 or 5, **characterized in that** the so-called additional gaseous fluid, having predetermined characteristics, is made up of a bacteriologically neutral, non-oxidizing gaseous fluid.

11. Process according to claim 2 or 5, **characterized in that** the so-called additional gaseous fluid, having predetermined characteristics, is made up of a gaseous fluid coming from the receptacle.

12. Process according to any one of the claims 1 to 11, **characterized in that**, for stopping the escape orifice (7), a stopping element (9) is utilized consisting of a disc (91) of flexible, air-tight material, one of the faces (92, 93) of which is joined fluid-tightly to the surface of the wall (11) which includes the escape orifice (7) so as to close this escape orifice (7) and hinder the passage of fluid through the latter.

13. Process according to any one of the claims 1 to 11, **characterized in that** a stopping element (9) is utilized consisting of a disc (91) of flexible, air-tight material.

14. Process according to any one of the claims 1 to 11, **characterized in that** a stopping element (9) is used consisting of a disc (91) of flexible, air-tight material, one (92) of the faces (92, 93) of which is coated with a layer (94) of glue chosen to produce the fluid-tight connection to the wall (11) of the receptacle.

15. Process according to any one of the claims 1 to 14 and according to which one provides oneself with a receptacle (1), the flexible wall (11) of which is made up of two elements (3, 4), of which a tub (3) and a lid (4),
• the tub (3) including an aperture (6) equipped with a peripheral face (61) intended to co-operate with a lid (4) in turn equipped with a surface (41) bearing on said peripheral face (61) of the aperture (6) of said tub (3), and
• the lid (4) including such a surface (41) bearing fluid-tightly on the peripheral face (61) of the loading aperture (6) of the tub (3),
this process being **characterized in that**:
- the lid (4) is placed bearing fluid-tightly against said peripheral face (61) of the aperture of the tub (3),
- in at least one of the elements (3, 4) of the receptacle (1), at least one orifice (7) is made, called escape orifice, of a cross-section notably reduced compared with the cross-section of the aperture (6) of said tub (3) and able to constitute a passage for a gaseous fluid (8) under pressure.

16. Process according to claim 15, **characterized in that** no later than before the application of the lid (4) to the tub (3):
- at least one of the surfaces (61, 41) which are the peripheral face (61) of the aperture of the tub (3) and/or the bearing surface (41) of the lid (4) is equipped with a joint (10) made of heat-sensitive material, i.e., a joint (10) comprising a material of a nature such that, at the time of the heat treatment of the contents of the receptacle (1), it produces a fluid-tight connection between the surfaces (41, 61) with which it is placed in contact.

17. Process according to any one of the claims 1 to 16, **characterized in that** each escape orifice (7) is made in a zone of the flexible wall (11) of which it is determined beforehand that it is kept away from the substances contained in the receptacle (1) at the time of their heat treatment.

18. Process according to claim 17, **characterized in that** when the receptacle (1) consists of a flexible pocket, the contour of which is determined by margins, each escape orifice (7) is made in a zone of the flexible wall which is adjacent to one of said margins.

19. Process according to claim 17, **characterized in that** when the receptacle (1) is made up of two elements (3, 4) of which, on the one hand, a tub (3) and, on the other hand, a lid (4), the wall of which is at least locally flexible and comprises a surface bearing on said tub (3), each escape orifice (7) is made in a zone of the lid (4) which is adjacent to its surface bearing on the tub (3).

20. Process according to any one of the claims 1 to 19, **characterized in that**:
- at the time of a test phase in a treatment installation of predefined type, there are determined,
• on the one hand, said third temperature value (T3) adapted to carry out the stopping of the escape orifice (7) of a receptacle (1) of given type in which certain substances (5) have been placed with a view to their treatment at the first temperature value (T1), and
• on the other hand, the duration of cooling necessary in order that the temperature of said substances (5) reaches the third temperature value (T3) desired,
- at the time of carrying out the process for treating the same substances (5) as those considered during the test, and doing so in a treatment installation similar to the installation used for the test phase, in a receptacle (1) of the same type as that used at the time of this test phase, stopping of the escape orifice (7) is effected when the duration of cooling from the first temperature value (T1) reaches the duration determined during the test phase.

21. Installation for carrying out the process according to any one of the claims 1 to 20, **characterized in that** it comprises
- a first device (13) for making in the wall (11) of the receptacle (1) at least one orifice (7), called escape orifice (7), of a cross-section notably reduced compared with the cross-section of the aperture (6) of said receptacle (1), but which is able to constitute a passage for a gaseous fluid (8) developing its pressure within the receptacle (1),
- a second device (14) for heat treatment of the substances (5) by bringing them to the first predetermined temperature value (T1), this second device (14) permitting the escape of the gaseous fluid (8) contained in the receptacle (1) through the escape orifice (7) provided for that purpose,
- a third device (15) for lowering the temperature of the substances (5) contained in the receptacle (1) down to a third predetermined temperature value (T3), and doing so without hindering the possibility for the gaseous fluid (8) contained in the receptacle (1) to escape through the escape orifice (7) provided for that purpose,
- a fourth device (16) for monitoring the at least indirect evolution of the temperature of the substances (5) contained in the receptacle (1), for detecting the third temperature value (T3), and for producing a control signal (161) when the third predetermined temperature value is, at least, considered to be reached,
- a fifth device (17) for stopping the escape orifice (7) contrived in the wall (11) of said receptacle (1), this device being controlled by the control signal (161) when the third predetermined temperature value (T3) is, at least, considered to be reached.

22. Installation according to claim 21, **characterized in that** it comprises a sixth device for applying, during cooling and before stopping of the escape orifice (7), a thrust action to the wall (11) of the receptacle (1) so as to cause the gradual evacuation of said gaseous fluid (8) and to maintain a certain overpressure within said receptacle (1) in order to perform at least one of the functions which are:
- to affect the shape of this receptacle (1) to an extent which can be compensated for by a rise in the pressure of the gaseous fluid (8) which is produced after stopping of the escape orifice (7),
- to accelerate the evacuation of said gaseous fluid (8) until the escape orifice (7) is stopped.

23. Installation according to claim 21 or 22, **characterized in that** it comprises a seventh device for injecting into the receptacle (1), during cooling, before stopping of the escape orifice (7), a so-called additional gaseous fluid, having predetermined characteristics, and doing so with a flow and a pressure such that, in escaping through the escape orifice (7), it maintains within the receptacle (1) a pressure of gaseous fluid (8) at a value (Pi) greater than the value (Pe) of the gas pressure outside the receptacle (1) until the moment deemed possible for effecting the stopping.
